# EUROPEAN PATENT APPLICATION

(11) **EP 4 516 983 A1**
(43) Date of publication of application: **05.03.2025**
(21) Application number: 23794943.3
(22) Date of filing: 31.03.2023
(51) Int. Cl.: D06F 39/00, D06F 39/08, D06F 39/10

(54) **WASHING APPARATUS, SWITCHING DEVICE, AND METHOD FOR CONTROLLING WASHING APPARATUS**

(30) Priority: 26.04.2022 CN 202210448292; 26.04.2022 CN 202210447683; 26.04.2022 CN 202210448312; 26.04.2022 CN 202210448294
(71) Applicant: QINGDAO HAIER LAUNDRY ELECTRIC APPLIANCES CO., LTD, Qingdao, Shandong 266101 (CN); Haier Smart Home Co., Ltd., Qingdao, Shandong 266101 (CN)
(72) Inventor: LV, Yanfen, Qingdao, Shandong 266101 (CN); XU, Sheng, Qingdao, Shandong 266101 (CN)
(74) Representative: Beck & Rössig European Patent Attorneys
(86) International application number: PCT/CN2023/085318
(87) International publication number: WO 2023/207508

(57) **Abstract**

A washing apparatus, a switching device and a control method of the washing apparatus, the washing apparatus comprising: a box (10); a water cylinder (100) arranged inside the box (10); a filter device (600) having a water inlet (6101) and a filtered water outlet (6102) respectively connected to the water cylinder (100); a switching device (800) for controlling the water cylinder (100) and an external drainage pipeline (250) of the washing apparatus to be connected to the filtered water outlet (6102) of the filter device (600), the external drainage pipeline (250) being used to drain water to the outside of the washing apparatus; a cylinder wall (104) of the water cylinder (100), a top wall (11) of the box (10), and a side wall of the box (10) together forming an installation space extending from the cylinder mouth (103) of the water cylinder to the cylinder bottom, and the switching device (800) is arranged in the installation space. The switching device (800) is arranged in an installation space formed between the water cylinder (100) and the box (10), which is approximately in the shape of a triangular prism, so that the internal structure of the washing apparatus box (10) is compact, which is conducive to reducing the volume of the entire washing apparatus.

## Description

### TECHNICAL FIELD

The present invention belongs to the field of washing apparatus, and in particular, relates to a washing apparatus, a switching device and a control method for the washing apparatus.

### BACKGROUND

In a washing machine for washing clothes, for example, a washing machine, due to friction between clothes and between clothes and the washing machine itself, lint will fall off the clothes and mix into the washing water. If the lint in the washing water cannot be removed, it is likely to adhere to the surface of the clothes after washing, affecting the washing effect of the clothes. For this reason, a filter for filtering lint is installed on the existing washing machine, and the washing water is continuously passed through the filter during the washing process to remove the lint from the washing water.

The filter of an existing washing machine is generally set inside the inner drum or the drain pump to filter out lint and debris in the washing water. However, after a long period of use, the filter will be filled with lint and debris, which will affect the filtering effect of the filter, cause the drain valve/drain pump to be blocked, and easily breed bacteria. It needs to be cleaned in time, otherwise it will cause pollution of the washing water, secondary pollution of clothes, and affect the health of users. However, most washing machines require users to remove the filter and clean it manually, which is inconvenient to operate.

To this end, the prior art proposes a filter device that is independently arranged inside the washing machine and has a self-cleaning function. However, in order to achieve the circulation filtration of the washing water, a circulation pipeline for the circulation of the washing water needs to be set in the washing machine, which makes the water circuit structure inside the washing machine more complicated. The filter device itself and the complicated water circuit structure will occupy a large space inside the washing machine, affecting the volume of clothes that the washing machine can accommodate. At the same time, the increased complexity of the water circuit structure will also make the on-off control of the water circuit more complicated and cumbersome, and more water circuit on-off control devices will be required, further increasing the occupation of the installation space inside the washing machine.

On the other hand, the current self-cleaning filter device generally discharges the filtered impurities directly from the washing machine. However, most of the filtered impurities are clothing fibers that fall off the clothes. In recent years, with the popularization of chemical fiber fabrics, these shed clothing fibers are mainly composed of microplastics or micro-thread scraps. They will enter the ecological cycle directly when discharged with the washing machine drainage water flow, and eventually accumulate in the human body through the natural food chain, which may affect human health. At the same time, if the washing machine drainage is discharged without filtering, there will also be a problem of excessive microplastic content.

In view of this, the present invention is proposed.

### SUMMARY OF THE INVENTION

The technical problem to be solved by the present invention is to overcome the deficiencies of the prior art and provide a washing apparatus, a switching device and a control method of the washing apparatus.

In order to solve the above technical problems, the first object of the present invention is to provide a washing apparatus in which a switching device for controlling water path switching is arranged in an installation space formed by the wall of the water cylinder, the top wall and the side wall of the box, so that the internal structure of the washing apparatus is more compact. Specifically, the following technical solutions are adopted:
A washing apparatus, comprising:
a box;
a water cylinder, arranged inside the box;
a filter device having a water inlet and a filtered water outlet respectively communicated to the water cylinder;
a switching device for controlling the water cylinder and an external drainage pipeline of the washing apparatus to be communicated to the filtered water outlet of the filter device, and the external drainage pipeline is configured to discharge water to an outside of the washing apparatus;
a cylinder wall of the water cylinder, a top wall of the box, and side walls of the box together form an installation space extending from a cylinder mouth of the water cylinder to a bottom of the cylinder, and the switching device is arranged in the installation space.

Furthermore, a connecting frame is installed inside the side wall of the box constituting the installation space, and the switching device is installed on the connecting frame.

Furthermore, an installation part extending a certain length in a horizontal direction is provided on an inner side of an upper portion of the side wall, and the installation part is protruded from the inner surface of the side wall; the connecting frame comprises:
a connecting part, is configured to connect with the installation part, and at least comprising a first limiting portion affixed to an upper surface of the installation part, and a second limiting portion located below the installation part and at least partially affixed to the installation part;
a plate-shaped part, formed by extending downward from a side of the second limiting portion close to the side wall, and the switching device is installed on a surface of the plate-shaped part facing away from the side wall.

Furthermore, the switching device has a certain length L in a horizontal direction from the cylinder mouth of the water cylinder to the bottom of cylinder, and has a certain width K in a direction perpendicular to its length direction, and the width K is smaller than the length L.

Furthermore, the filter device is arranged in the installation space where the switching device is located.

Furthermore, the switching device is arranged in an area close to the side wall of the box in the installation space, and the filter device is arranged in an area close to the top wall of the box in the installation space.

Furthermore, the switching device and the filter device are at least partially staggered in the horizontal extension direction of the installation space;

Preferably, the switching device is arranged at one end of the installation space close to the cylinder mouth of the water cylinder; and the filter device is arranged at one end of the installation space close to the bottom of the water cylinder.

Furthermore, an installation beam is provided in a top area of the box, and the filter device is connected to the installation beam.

Furthermore, the installation beam has a certain extension length, and both ends of the installation beam respectively provided with a beam connecting part for connecting with the box; the filter device is connected to a beam main body between the two beam connecting parts, and the beam main body is higher than the beam connecting part.

Furthermore, the filter device has a sewage outlet for discharging sewage to the outside, and the washing apparatus further comprises a recovery device communicated to the sewage outlet for receiving sewage discharged from the filter device.

The cylinder wall of the water cylinder, the top wall of the box, and the other side wall of the box together constitute another installation space arranged opposite to the installation space where the switching device is located, and the recovery device is arranged in the other installation space.

Furthermore, the switching device is configured to control an on-off state between the sewage outlet of the recovery device and the filter device.

The second object of the present invention is to provide a washing apparatus that can receive sewage discharged from a filter device through a recovery device, and the recovery device is arranged inside a water groove of a detergent dispensing device to reduce space occupation. Specifically, the following technical solutions are adopted:
A washing apparatus, comprising:
a water cylinder;
a circulating filtering pipeline, a water inlet and a water outlet of which are respectively communicated to the water cylinder;
a filter device, arranged on the circulating filtering pipeline, having a sewage outlet for discharging sewage to outside;
a detergent dispensing device, wherein a recovery device is provided inside a water groove of the detergent dispensing device, and the recovery device is communicated with the sewage outlet of a filter device.

Furthermore, the water groove is communicated to the water cylinder, and the recovery device includes a debris collection assembly arranged inside the water groove; the debris collection assembly receives sewage discharged by the filter device for filtering, collects filtered impurities in the sewage, and the filtered water enters the water groove.

Furthermore, an insertable/removable dispenser box is provided in the water groove, and a detergent adding chamber and a recovery installation chamber isolated from each other are formed on the dispenser box, and the detergent adding chamber and the recovery installation chamber are independently communicated to the water groove respectively; the debris collection assembly is installed in the recovery installation chamber.

Furthermore, an insertable/removable recovery installation box is provided in the water groove, an internal volume of the recovery installation box is communicated with the water groove; and the debris collection assembly is installed inside the recovery installation box.

Furthermore, the debris collection assembly comprises:
a filter bracket, forms a filter chamber for receiving sewage, and the filter bracket is provided with a sewage inlet and a plurality of water outlets.
a filter screen, covers the water outlet and is configured to filter the received sewage.

Furthermore, a sewage inlet communicated to the sewage outlet of the filter device is provided on the water groove; the debris collection assembly is inserted into the water groove along with the dispenser box or the recovery installation box, and the sewage inlet is sealedly connected with the sewage inlet; the debris collection assembly is pulled out of the water groove along with the dispenser box or the recovery installation box, and the sewage inlet is separated from the sewage inlet.

Furthermore, the debris collection assembly is arranged on the dispenser box, and an isolation baffle is arranged inside the dispenser box to form the detergent adding chamber and the recovery installation chamber that are isolated from each other; the water outlet is at least arranged on an upper surface of the filter bracket, and an upper side of the isolation baffle is at least higher than the upper surface of the filter bracket.

Furthermore, the debris collection assembly comprises:
a filter frame, configured to be detachably mounted in a bottom area of the water groove to form a debris collection chamber with an opening at top, the opening of the debris collection chamber is configured to receive sewage discharged by the filter device, a water outlet is provided on the filter frame; and
a filter screen, covers the water outlet and is configured to filter the received sewage.

Furthermore, the water outlet is at least arranged on a bottom wall of the filter frame, and a plurality of raised supports are arranged at intervals on an inner side of the bottom wall of the water groove corresponding to the installation position of the filter frame, and the supports are supported below the filter frame so that the bottom wall of the filter frame is spaced apart from the bottom wall of the water groove.

Furthermore, a sewage inlet communicated to the sewage outlet of the filter device is provided on the water groove, a sewage flow channel communicated to the sewage inlet is provided inside the water groove, and an opening of the debris collection chamber is provided below the water outlet end of the sewage flow channel.

The third object of the present invention is to provide a switching device that can selectively control the state switching of the first valve body or the second valve body by changing the movement direction of the driving member, a washing apparatus having the switching device, and a control method of the washing apparatus, so as to achieve the switching of different water channel on-off states in the washing apparatus by changing the rotation direction of the driving motor in the switching device. Specifically, the following technical solutions are adopted:
A switching device, comprising:
a first valve body, having a first inlet and a first outlet, and a first valve plug for controlling an opening and closing between the first inlet and the first outlet is arranged inside;
a second valve body, having a second inlet and a second outlet, and a second valve plug for controlling an opening and closing of the second inlet and the second outlet is arranged inside.

A driving member and a transmission mechanism are provided, the driving member generates movement in a first direction, and drives the first valve plug to move through the transmission mechanism; the driving member generates movement in a second direction opposite to the first direction, and drives the second valve plug to move through the transmission mechanism.

Furthermore, the driving member includes a driving wheel, and the transmission mechanism includes two groups of transmission components; one group of the transmission components is transmission-connected to the first valve plug to convert a rotation of the driving wheel along the first direction into a movement of the first valve plug; the other group of the transmission components is transmission-connected to the second valve plug to convert a rotation of the driving wheel along the second direction into a movement of the second valve plug.

Furthermore, the rotation of the driving wheel in the first direction drives the first valve plug to move, while the second valve plug remains stationary; the rotation of the driving wheel in the second direction drives the second valve plug to move, while the first valve plug remains stationary.

Further, the transmission assembly comprises a transmission wheel having an annular structure, and a one-way transmission member coaxially arranged inside the annular structure, and the driving wheel is in transmission connection with the transmission wheel or the one-way transmission member.

A protruding stop part is provided on the inner circumferential wall of the annular structure of the transmission wheel, and the stop part has a stop surface and a release surface which respectively form a certain angle with the circumference of the inner circumferential wall.

The one-way transmission member comprises a transmission body and a pushing body fixedly arranged on an outer peripheral wall of the transmission body, the outer peripheral wall of the transmission body is spaced apart from the inner circumferential wall of the annular structure, and the pushing body extends obliquely from the outer peripheral wall of the transmission body to the inner circumferential wall of the annular structure.

An extended end of the pushing body has a pushing surface, and the one-way transmission member rotates in one direction relative to the transmission wheel so that the pushing surface stops at the stop surface, driving the transmission wheel and the one-way transmission member to rotate synchronously; the pushing body has a sliding surface on the side facing the inner circumferential wall of the annular structure, and the one-way transmission member rotates in another direction relative to the transmission wheel so that the sliding surface slides along the release surface, and the transmission wheel remains stationary.

Further, the transmission assembly comprises a first transmission assembly drivingly connected to the first valve plug, and a second transmission assembly drivingly connected to the second valve plug; the first transmission assembly comprises a first transmission wheel and a first one-way transmission member coaxially arranged, and the second transmission assembly comprises a second transmission wheel and a second one-way transmission member coaxially arranged.

The first one-way transmission member is coaxially arranged with the driving wheel and is connected to the driving wheel through a circumferential limiting structure, so that the driving wheel and the first one-way transmission member rotate synchronously; the first transmission assembly also includes a first output wheel, which is arranged on one side of an outer periphery of the first transmission wheel and is connected to the first transmission wheel and rotates with the first transmission wheel.

The second transmission wheel is arranged on one side of an outer periphery of the driving wheel, and is in transmission connection with the driving wheel, and rotates with the driving wheel; the second transmission assembly also includes a second output wheel, which is coaxially arranged with the second one-way transmission member, and is in transmission connection with the second one-way transmission member through a circumferential limiting structure, so that the second output wheel and the second one-way transmission member rotate synchronously.

The second output wheel is arranged coplanar with the first output wheel and is located on the other side of the outer periphery of the first transmission wheel relative to the first output wheel.

Furthermore, the switching device further comprises a driving motor, an output end of which is connected to the first one-way transmission member, and can drive the first one-way transmission member to generate bidirectional rotation along the first direction and the second direction.

Further, the first valve plug is reciprocatably arranged inside the first valve body to open/close the communication between the first inlet and the first outlet; a first protrusion is eccentrically arranged on a surface of the first output wheel facing away from the driving wheel, and the first transmission assembly further comprises a first connecting rod; the first connecting rod extends along a reciprocating direction of the first valve plug, one end of the first connecting rod is connected to the first valve plug, and the other end is provided with a first slideway extending in a direction perpendicular to the first connecting rod; the first protrusion is slidably arranged in the first slideway.

And/or, the second valve plug is reciprocatingly arranged inside the second valve body to open/disconnect a communication between the second inlet and the second outlet; a second protrusion is eccentrically arranged on a surface of the second output wheel facing away from the driving wheel, and the second transmission assembly also includes a second connecting rod; the second connecting rod extends along a reciprocating direction of the second valve plug, one end of which is connected to the second valve plug, and the other end of which is provided with a second slide extending in a direction perpendicular to the second connecting rod; the second protrusion is slidably arranged in the second slide.

Furthermore, a third outlet is also provided on the first valve body of the switching device, and the first valve plug controls the first outlet and the third outlet to selectively communicate with the first inlet.

A washing apparatus, comprising:
a water cylinder;
a circulating filtering pipeline, a water inlet and a water outlet of which are respectively communicated to the water cylinder;
a filter device, is arranged on the circulating filtering pipeline and has a sewage outlet communicated to a sewage pipeline.

It also includes the switching device mentioned above, the first valve body is arranged on the circulating filtering pipeline, the second valve body is arranged on the sewage discharge pipeline, and the second inlet of the second valve body is connected to the sewage outlet of the filter device.

Furthermore, a third outlet is further provided on the first valve body of the switching device, and the first valve plug controls the first outlet and the third outlet to selectively communicate with the first inlet.

The washing apparatus also includes an external drainage pipeline for draining water to the outside, the first inlet of the first valve body is communicated to the filtered water outlet of the filter device, the first outlet is communicated to the water cylinder, and the third outlet is communicated to the external drainage pipeline.

A control method of the washing apparatus as described above, wherein the switching device further includes a driving motor, and
the control method comprising:
the driving motor rotating in a first direction, and drives the first valve plug to move through the transmission mechanism, thereby changing the on-off state of the circulating filtering pipeline;
the driving motor rotating in the second direction, and drives the second valve plug to move through the transmission mechanism, thereby changing the on-off state of the sewage pipeline.

Further, when the driving motor rotates in the first direction, the second valve plug remains stationary; when the driving motor rotates in the second direction, the first valve plug remains stationary.

Furthermore, the washing apparatus further comprises an external drainage pipeline for discharging water to the outside of the washing apparatus; a third outlet is further arranged on the first valve body of the switching device, the first inlet and the first outlet are communicated to the circulating filter pipeline, and the third outlet is communicated to the external drainage pipeline.

The switching device has a circulating filtering state that communicates the circulation filtering pipeline, and a draining state that communicates the water cylinder and the external drainage pipeline; the control method includes: driving the motor to rotate in the first direction, transmitting a movement of the first valve plug through the transmission mechanism, so that the switching device switches between the circulating filtering state and the draining state.

Further, the following steps are included:
S11', in initial state, the switching device communicates the water cylinder and the external drainage pipeline;
S12', the washing apparatus receives a circulation filtering instruction, drives the motor to rotate in the first direction, and switches the switching device to the circulating filtering state;
S13', the circulating filtering process ends, the driving motor rotates in the first direction again, and the switching device returns to the draining state.

Further, the following steps are included:
S11, in initial state, the switching device communicates the circulating filtration pipeline;
S12, the washing apparatus receives a draining instruction, drives the motor to rotate in the first direction, and switches the switching device to the draining state;
S13, the drainage process is completed, the driving motor rotates in the first direction again, and the switching device returns to the circulating filtering state.

Furthermore, the switching device is provided with a first position switch, and the first valve plug or the transmission mechanism is provided with two first triggering parts for triggering the first position switch, and the two first triggering parts correspond to the circulating filtering state and the draining state of the switching device respectively.

In step S12 and step S13, if a signal indicating that the first position switch is triggered is received, the driving motor stops rotating.

Further, the following steps are included:
S21, in initial state, the switching device cuts off the sewage pipeline;
S22, the washing apparatus receives a sewage discharge instruction, drives the motor to rotate in the second direction, and opens the sewage discharge pipeline;
S23, the sewage discharge process is completed, and the driving motor rotates in the second direction again to cut off the sewage discharge pipeline.

Furthermore, the switching device is provided with a second position switch, and the second valve plug or the transmission mechanism is provided with two second triggering parts for triggering the second position switch, and the two second triggering parts correspond to the on state and the off state of the sewage pipeline respectively.

In step S22 and step S23, if a signal indicating that the second position switch is triggered is received, the driving motor stops rotating.

Furthermore, the washing apparatus also includes a circulation pump arranged on the circulation filtering pipeline and located between the water cylinder and the water inlet of the filter device; in step S22, after the sewage pipeline is connected, the circulation pump is turned on to drive the sewage in the filter device to be discharged.

After adopting the above technical scheme, the present invention has the following beneficial effects compared with the prior art.
1. The switching device is arranged in the installation space formed between the water cylinder and the box, which is close to a triangular prism. The space inside the box is fully utilized, so that the internal structure of the washing machine box is compact, which is conducive to ensuring that the water cylinder has a larger capacity under the premise of reducing the volume of the whole washing machine.
2. The filter device can discharge the filtered impurities attached therein with the water flow, and the discharged sewage is passed into the recovery device instead of being directly discharged with the drainage water flow, thus avoiding the problem that the microplastics contained in the filtered impurities are directly discharged with the water flow and affect the ecological environment; the recovery device is independently arranged in the circulating filtration pipeline, and even if it is blocked by the filtered impurities, it will not affect the circulating filtration process of the washing apparatus. In addition, the recovery device is arranged in the water groove of the detergent dispensing device, which does not occupy additional installation space, making the structure of the washing apparatus more compact, which is conducive to the miniaturization of the overall volume of the washing apparatus.
3. By controlling the driving member in the switching device to produce movement in different directions, the first valve plug or the second valve plug can be selectively driven to move, and then the on-off state between the first inlet and the first outlet on the first valve body, or the on-off state between the second inlet and the second outlet on the second valve body can be selectively controlled. On this basis, the switching device only has one driving motor to control the on-off state switching of the two valve bodies, which can be used in washing apparatus to simplify the water circuit structure and the control logic of the water circuit on-off. Further, in the process of changing the on-off state of one valve body, the on-off state of the other valve body is not affected, and the control of the water circuit in the washing apparatus is more reliable.

The specific implementation modes of the present invention are further described in detail below in conjunction with the accompanying drawings.

### BRIEF DESCRIPTION OF THE DRAWINGS

The accompanying drawings are part of the present invention and are used to provide a further understanding of the present invention. The exemplary embodiments of the present invention and their descriptions are used to explain the present invention, but do not constitute an improper limitation of the present invention. Obviously, the accompanying drawings described below are only some embodiments. For ordinary technicians in this field, other accompanying drawings can be obtained based on these accompanying drawings without creative work. In the accompanying drawings:
FIG. 1 is a schematic diagram of the exploded structure of a washing apparatus according to an embodiment of the present invention (the top wall of the box is not shown);
FIG. 2 is a schematic diagram of the top structure of the washing apparatus in an embodiment of the present invention (the mounting beam and the top wall of the box are not shown);
FIG. 3 is a front view of a washing apparatus according to an embodiment of the present invention;
FIG. 4 is a schematic diagram of the operating principle of the washing apparatus according to an embodiment of the present invention;
FIG. 5 is a schematic diagram of a switching device installed on a connecting frame according to an embodiment of the present invention;
FIG. 6 is a schematic diagram of the structure of the switching device according to an embodiment of the present invention;
FIG. 7 is an exploded view of a driving motor, a driving wheel and a part of a transmission mechanism of the switching device according to an embodiment of the present invention;
FIG. 8 is an exploded view of the structure shown in FIG. 7 of the present invention from another perspective;
FIG. 9 is a schematic structural diagram of a transmission wheel in an embodiment of the present invention;
FIG. 10 is a schematic diagram of the assembly of the transmission wheel and the one-way transmission member in an embodiment of the present invention;
FIG. 11 is a schematic diagram of the working state of the switching device in an embodiment of the present invention;
FIG. 12 is an exploded view of the switching device according to an embodiment of the present invention;
FIG. 13 is a cross-sectional view of the switching device in an embodiment of the present invention (circulating filtering state);
FIG. 14 is a cross-sectional view of the switching device in an embodiment of the present invention (draining state);
FIG. 15 is a cross-sectional view of the switching device according to an embodiment of the present invention (draining state);
FIG. 16 is a schematic diagram of the structure of a detergent dispensing device according to an embodiment of the present invention;
FIG. 17 is a schematic diagram of the AA section in FIG. 16 of the present invention;
FIG. 18 is a schematic diagram of the structure of the detergent dispensing device in Embodiment 6 of the present invention;
FIG. 19 is a schematic diagram of the BB section in FIG. 18 of the present invention;
FIG. 20 is a schematic diagram of the structure of the debris collection assembly in Embodiment 6 of the present invention;
FIG. 21 is a schematic structural diagram of the debris collection assembly from another perspective in Embodiment 6 of the present invention;
FIG. 22 is a flow chart of a drainage process of a washing apparatus in Embodiment 3 of the present invention;
FIG. 23 is a flow chart of the sewage discharge process of the filter device in Embodiment 3 of the present invention;
FIG. 24 is a flow chart of the circulating filtering process of the washing apparatus in the Embodiment 4 of the present invention.

In the figure: 10, box; 11, top wall; 12, front side wall; 13, left side wall; 14, right side wall; 15, installation part; 16, rear side wall; M, first installation space; N, second installation space; 20, connecting frame; 21, connecting part; 22, plate-shaped part; 30, installation beam; 31, beam connecting part; 32, beam main body; 100, water cylinder; 103, cylinder mouth; 104, cylinder wall; 110, window pad; 220, circulation pipeline; 230, return water pipeline; 240, sewage pipelineline; 250, external drainage pipeline; 260, water cylinder drainage pipe; 280, connecting pipelineline; 300, detergent dispensing device; 301, sewage inlet; 302, drainage outlet; 310, water groove; 311, bottom wall; 312, inclined wall; 321, support; 322, limit baffle; 330, sewage flow channel; 340, dispenser box; 341, detergent adding chamber; 342, recovery installation chamber; 343, isolation baffle; 344, overflow plate; 345, handle; 400, circulation pump; 500, recovery device; 560, debris collection assembly; 561, filter frame; 562, water outlet; 563, filter bracket; 564, sewage inlet; 600, filter device; 610, filter chamber; 6101, water inlet; 6102, filtered water outlet; 6103, sewage outlet; 614, connecting column; 620, filter mechanism; 660, driving mechanism;
800, switching device; 801, first mounting plate; 8011, mounting plate connecting part; 802, second mounting plate; 8021, guide portion; 803, third mounting plate; 8031, mounting plate fixing portion; 804, valve body connecting part; 840, first valve body; 8401, first inlet; 8402, first outlet; 8403, third outlet; 841, first valve plug; 8411, switching part; 8412, first connecting part; 8413, first sealing part; 842, first connecting rod; 8421, first slideway; 843, first output wheel; 8431, first protrusion; 844, first position switch; 845, first valve cover; 850, second valve body; 8501, second inlet; 8502, second outlet; 851, second valve plug; 8511, blocking part; 8512, second connecting part; 8513, second sealing part; 852, second connecting rod; 8521, second slideway; 853, second output wheel; 8531, second protrusion; 8532, internal spline; 854, second position switch; 855, second valve cover; 861, driving wheel; 8611, internal spline; 862, driving motor; 8621, output end; 863, sealing ring; 870, transmission wheel; 8701, stop part; 8702, stop surface; 8703, release surface; 8704, inner circumferential wall; 871, first transmission wheel; 872, second transmission wheel; 880, one-way transmission member; 8801, transmission body; 8802, pushing body; 8803, pushing surface; 8804, sliding surface; 881, first one-way transmission member; 8811, external spline; 8812, internal spline; 882, second one-way transmission member.

It should be noted that these drawings and textual descriptions are not intended to limit the conceptual scope of the present invention in any way, but are intended to illustrate the concept of the present invention for those skilled in the art by referring to specific embodiments.

### DETAILED DESCRIPTION

In order to make the purpose, technical solutions and advantages of the embodiments of the present invention clearer, the technical solutions in the embodiments will be clearly and completely described below in conjunction with the drawings in the embodiments of the present invention. The following embodiments are used to illustrate the present invention but are not used to limit the scope of the present invention.

In the description of the present invention, it should be noted that the directions or positional relationships indicated by terms such as "upper", "lower", "front", "back", "left", "right", "vertical", "inside" and "outside" are based on the directions or positional relationships shown in the accompanying drawings, and are only for the convenience of describing the present invention and simplifying the description, rather than indicating or implying that the device or element referred to must have a specific direction, be constructed and operated in a specific direction, and therefore cannot be understood as a limitation on the present invention.

In the description of the present invention, it should be noted that, unless otherwise clearly specified and limited, the terms "installed", " connected ", and "connected" should be understood in a broad sense, for example, it can be a fixed connection, a detachable connection, or an integral connection; it can be a mechanical connection or an electrical connection; it can be a direct connection or an indirect connection through an intermediate medium. For ordinary technicians in this field, the specific meanings of the above terms in the present invention can be understood according to specific circumstances.

### Embodiment 1

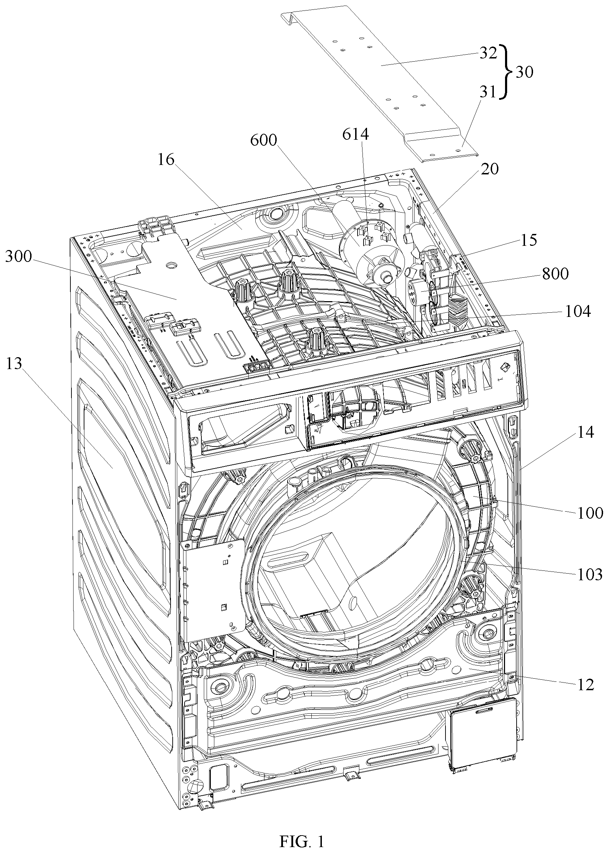

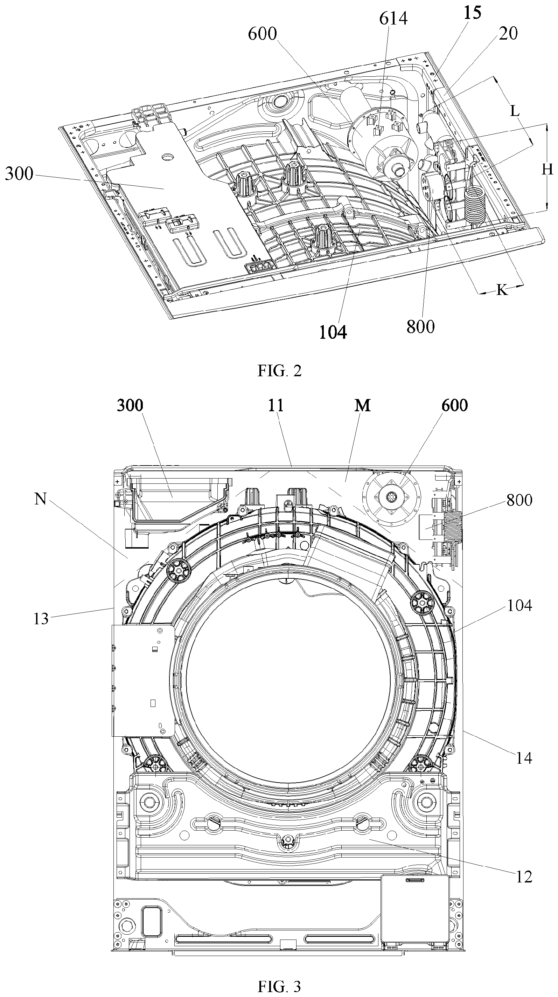

As shown in FIGS 1 to 4, the washing apparatus described in this embodiment includes a box 10 and a water cylinder 100 disposed in the box 10. The washing apparatus can be a washing machine, a washing-drying machine, a care machine, or other washing apparatus having a clothes washing function.

Specifically, the box 10 includes a top wall 11 and four side walls surrounding the outer circumference of the top wall 11, and the cylinder mouth 103 of the water cylinder 100 is arranged toward the front side wall 12. The top of the water cylinder 100 is arranged close to the top wall 11, so that the cylinder wall 104 of the water cylinder 100 and the top wall 11 and the right side wall 14 of the box 10 together form a first installation space M extending from the cylinder mouth 103 to the bottom of the water cylinder 100. The first installation space M in this embodiment is extended in the front-to-back horizontal direction.

The washing apparatus of this embodiment also includes a filter device 600, which is used to filter the water passed therein and remove impurities such as lint in the water. Specifically, the filter device 600 has a water inlet 6101 and a filtered water outlet 6102 respectively connected to the water cylinder 100. A circulation pump 400 is arranged between the water cylinder 100 and the water inlet 6101 of the filter device 600. When the circulation pump 400 is working, it can drive the water in the water cylinder 100 to enter the filter device 600, and the filtered water flows out from the filtered water outlet 6102 and can return to the water cylinder 100, so as to realize the circulation filtration during the operation of the washing apparatus.

The washing apparatus further includes an external drainage pipeline 250 for draining water to the outside of the washing apparatus. The washing apparatus is further provided with a switching device 800 for controlling the water cylinder 100 or the external drainage pipeline 250 to be connected to the filtered water outlet 6102 of the filter device 600. During the washing/rinsing process of the washing apparatus, the water in the water cylinder 100 enters the filter device 600 for filtration under the driving action of the circulation pump 400, and returns to the water cylinder 100 after filtration. During the drainage process, the circulation pump 400 drives the water in the water cylinder 100 to enter the filter device 600, and after filtration, the water enters the external drainage pipeline 250 for discharge.

In the above scheme, the drainage water flow of the washing apparatus is first filtered by the filter device 600 and then discharged from the washing apparatus, so that the drainage water flow does not carry filtered impurities, thereby avoiding the problem that microplastics contained in the filtered impurities are directly discharged with the drainage water flow and enter the ecological cycle, which harms the ecological environment and human health. The switching device 800 controls the connection direction of the waterway, so that the circulating filtration and the external drainage of the washing apparatus share part of the waterway structure, which is conducive to simplifying the waterway structure and saving the space occupied by the waterway structure inside the box 10.

In detail, in this embodiment, the bottom of the water cylinder 100 is connected to the water cylinder drain pipe 260, the water cylinder drain pipe 260 is connected to the inlet end of the circulation pump 400, the outlet end of the circulation pump 400 is connected to the circulation pipeline 220, and the circulation pipeline 220 is further connected to the water inlet 6101 of the filter device 600. The filtered water outlet 6102 of the filter device 600 is connected to the first inlet 8401 of the switching device 800 through the connecting pipelineline 280, and the first inlet 8401 receives the clean water filtered by the filter device 600. The third outlet 8403 of the switching device 800 is connected to the external drainage pipeline 250, and the filtered clean water is sent to the external drainage pipeline 250 for discharge when the washing apparatus is drained, and the first outlet 8402 is connected to the return water pipeline 230, and the filtered clean water is sent back to the water cylinder 100 during circulation filtration. The water outlet end of the return water pipe 230 is connected to the window pad 110 at the cylinder mouth 103 of the water cylinder 100, and water is returned to the water cylinder 100 through the window pad 110.

In this embodiment, a first installation space M in the shape of a triangular prism is formed between the water cylinder 100 and the box 10 in the upper right area of the box 10, and the switching device 800 and the filter device 600 are arranged together in the first installation space M. The above arrangement can make full use of the internal space of the box 10, so that the internal structure of the box 10 of the washing apparatus is compact, which is conducive to ensuring that the water cylinder 100 has a larger capacity under the premise of reducing the overall volume of the washing apparatus.

In a further solution of this embodiment, a connecting frame 20 is installed on the inner side of the right side wall 14, and the switching device 800 is installed on the connecting frame 20, so as to achieve fixation of the switching device 800 inside the box 10.

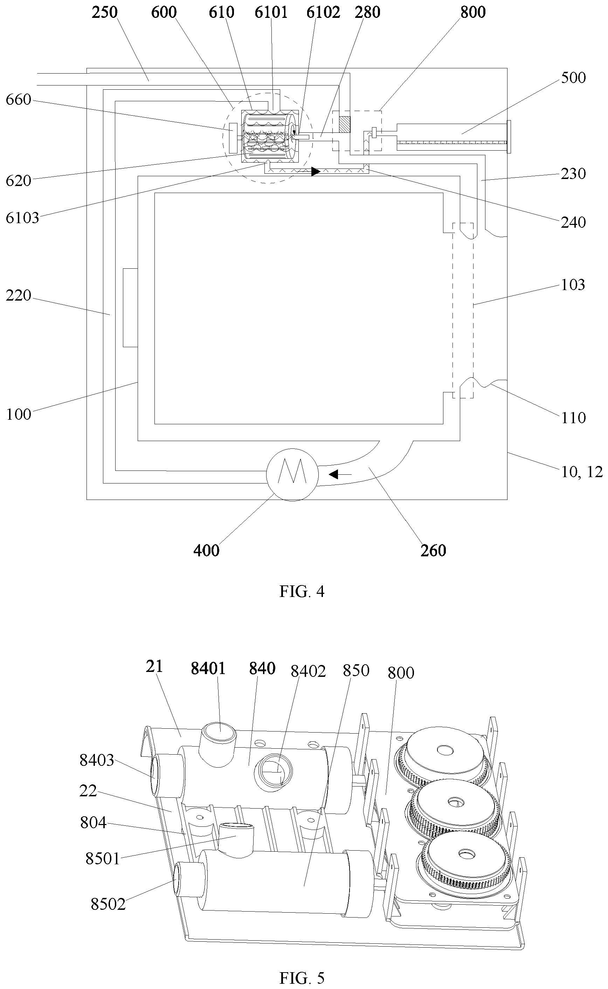

Specifically, as shown in Fig. 1 and Fig. 5, an installation part 15 extending horizontally along the front-rear direction for a certain length is provided on the upper inner side of the right side wall 14, and the installation part 15 protrudes from the inner surface of the right side wall 14. The connecting frame 20 includes a connecting part 21 and a plate-shaped part 22, the connecting part 21 is connected and fixed to the installation part 15, and the switching device 800 is installed on the plate-shaped part 22.

In detail, the installation part 15 is formed by horizontally extending a certain distance from the upper edge of the right side wall 14 and then extending a certain distance downward, and the two ends of the installation part 15 extend to the front side wall 12 and the rear side wall 16 of the box 10 respectively. The connecting part 21 of the connecting frame 20 includes a first limiting portion that is attached to the upper surface of the installation part 15, a transition portion that is formed by extending downward from the left side of the first limiting portion, and a second limiting portion that extends rightward from the lower edge of the transition portion and is attached to the lower edge of the installation part 15 below the installation part 15. The plate-shaped part 22 extends downward from the right side of the second limiting portion to form a plate-shaped structure, and the switching device 800 is installed on the surface of the plate-shaped part 22 that is not facing the right side wall 14.

In the above scheme, the switching device 800 is connected to the right side wall 14 of the box 10 through the connecting frame 20. The right side wall 14 of the box 10 is only provided with an installation part 15 on the upper edge for mounting the connecting frame 20, and the right side surface of the switching device 800 can be fixed to the connecting frame 20 over a larger area, thereby improving the stability of the installation of the switching device 800. The connecting part 21 of the connecting frame 20 covers the installation part 15 from the upper and lower sides respectively, which can effectively limit the connection frame 20 in the vertical direction, thereby reducing the shaking of the switching device 800 installed thereon in the vertical direction, and further enhancing the stable installation of the switching device 800.

The installation stability of the switching device 800 is improved, which can prevent it from shaking significantly during the operation of the washing apparatus, thereby preventing the switching device 800 from shaking and causing the connection structure between it and the water channel to loosen, causing water leakage in the washing apparatus.

Further, the switching device 800 has a first valve body 840, and the first inlet 8401, the first outlet 8402 and the third outlet 8403 are all arranged on the first valve body 840. Among them, the third outlet 8403 faces the rear side wall 16 of the box 10, and the first inlet 8401 and the first outlet 8402 face away from the right side wall 14 of the box 10. The switching device 800 can control the first outlet 8402 and the third outlet 8403 on the first valve body 840 to be connected to the first inlet 8401, thereby switching whether the filtered water discharged by the filter device 600 returns to the water cylinder 100 or is discharged from the external drainage pipeline 250.

The switching device 800 is installed in a manner that is close to the right side wall 14 as a whole, and has a length L in the front-to-back horizontal direction, a width K in the left-to-right horizontal direction, and a height H in the vertical direction. The width K of the switching device 800 is smaller than its length L, and the height H is preferably also smaller than the length L. Since the first installation space M extends in the front-to-back horizontal direction, the longest length direction of the switching device 800 is arranged in the front-to-back horizontal direction, so that the space size in the first installation space M can be more effectively utilized.

In a further solution of this embodiment, the switching device 800 is arranged in the first installation space M in the upper right area of the box 10 in an area close to the right side wall 14, and the filter device 600 arranged in the first installation space M together with the switching device 800 is located in the first installation space M in an area close to the top wall 11 of the box 10.

Since the top wall 11 and the right side wall 14 of the box 10 form a right-angle area of the first installation space M, the filter device 600 and the switching device 800 are respectively installed close to the top wall 11 and the right side wall 14 of the box 10, and can avoid each other to prevent the structures from interfering with each other, thereby improving the space utilization rate in the first installation space M.

Furthermore, the switching device 800 and the filter device 600 are at least partially staggered in the front-rear horizontal extension direction of the first installation space M, which can further achieve the purpose of mutual avoidance.

Specifically, in this embodiment, the switching device 800 is disposed in the first installation space M at one end close to the cylinder mouth 103 of the water cylinder 100, i.e., at the front end of the first installation space M. The filter device 600 is disposed in the first installation space M at one end close to the bottom of the water cylinder 100, i.e., at the rear end of the first installation space M.

In this embodiment, in order to fix the filter device 600 inside the box 10, a installation beam 30 is provided in the top area of the box 10, and the upper side of the filter device 600 is connected to the installation beam 30.

Specifically, the installation beam 30 extends a certain length in the front-rear horizontal direction, and the front and rear ends of the installation beam 30 respectively have beam connecting parts 31 for connecting with the box 10. The filter device 600 is connected to the beam main body 32 between the two beam connecting parts 31, and the beam main body 32 is higher than the beam connecting part 31.

In detail, the beam connecting part 31 is provided with connecting holes, and the front and rear beam connecting parts 31 are respectively connected to the upper edge of the front side wall 12 and the upper edge of the rear side wall 16 of the box 10. A plurality of connecting columns 614 are provided on the upper side of the filter device 600, and a plurality of mounting holes are provided on the beam main body 32 corresponding to the connecting columns 614. Screws pass through the mounting holes on the beam main body 32 and are screwed into the connecting columns 614 to fix the filter device 600 to the installation beam 30.

In this embodiment, when assembling the washing apparatus, the switching device 800 can be pre-installed on the connecting frame 20, and the filter device 600 and the installation beam 30 can be installed and fixed, and then the connecting frame 20 and the installation beam 30 can be respectively fixed to the inside of the box 10. Since the switching device 800 and the filter device 600 are installed together in the first vacant installation space M in the upper right area of the box 10, the structure is compact, and the switching device 800 and the filter device 600 can be installed close to the inner wall of the box 10, which is conducive to simplifying the fixing structure of the two, thereby reducing the samples used for installing and fixing the two, and can reduce production costs.

In a further solution of this embodiment, the filter device 600 has a sewage outlet 6103 for discharging sewage to the outside, and the washing apparatus also includes a recovery device 500 connected to the sewage outlet 6103 for receiving sewage discharged from the filter device 600. The filter device 600 in this embodiment can automatically clean and discharge the filtered impurities inside, saving the trouble of manual cleaning by the user. The sewage carrying the filtered impurities is discharged from the sewage outlet 6103 and then enters the recovery device 500, instead of being directly discharged from the washing apparatus, avoiding the problem of microplastics contained in the filtered impurities being directly discharged from the washing apparatus.

Specifically, the filter device 600 of this embodiment includes:
a filter chamber 610, being provided with a water inlet 6101, a filtered water outlet 6102 and a sewage outlet 6103;
a filter mechanism 620, being rotatably disposed inside the filter chamber 610;
a driving mechanism 660, being connected to the filtering mechanism 620 and used to drive the filtering mechanism 620 to rotate in the filter chamber 610.

The filter mechanism 620 divides the interior of the filter chamber 610 into an outer chamber and an inner chamber, wherein the water inlet 6101 is connected to the outer chamber, and the filtered water outlet 6102 is connected to the inner chamber. The water in the water cylinder 100 enters the outer chamber through the water inlet 6101 under the action of the circulation pump 400, and enters the inner chamber through the filter mechanism 620 to be filtered. The filtered impurities carried in the water adhere to the outer wall of the filter mechanism 620, and the clean water with the filtered impurities removed can flow out from the filtered water outlet 6102.

When it is necessary to clean the filtered impurities inside the filter device 600, the filter mechanism 620 is driven to rotate through the driving mechanism 660, which can stir the water flow in the filter chamber 610, so that the filtered impurities attached to the outer wall of the filter mechanism 620 are peeled off under the dual effects of centrifugal force and agitated water flow, and merged into the water in the filter chamber 610, and then discharged with the water flow from the sewage outlet 6103 on the filter chamber 610.

The sewage outlet 6103 is connected to the recovery device 500 through the sewage pipeline 240 , and the sewage carrying the filtered impurities is passed into the recovery device 500 through the sewage pipeline 240 .

Furthermore, the switching device 800 also has a second valve body 850, and a second inlet 8501 and a second outlet 8502 are arranged on the second valve body 850. The two ends of the sewage pipeline 240 are respectively connected to the sewage outlet 6103 of the filter device 600 and the second inlet 8501 of the second valve body 850, and the second outlet 8502 of the second valve body 850 is communicated with the recovery device 500. The sewage discharged from the filter device 600 passes through the sewage pipeline 240 and the second valve body 850 in sequence, and finally enters the recovery device 500. The second outlet 8502 faces the rear side wall 16 of the box 10, and the second inlet 8501 faces away from the right side wall 14 of the box 10. The switching device 800 can control the on-off between the second inlet 8501 and the second outlet 8502, thereby controlling whether the filter device 600 and the recovery device 500 are connected, and then controlling the process of sewage discharge in the filter device 600.

In the above scheme, the water control structure for controlling the flow direction of filtered water in the filter device 600 after discharge and the water control structure for controlling whether sewage in the filter device 600 can be discharged are integrated into an overall switching device 800, which can further save space inside the box 10.

In the preferred solution of this embodiment, an openable/closable control valve (not shown in the figure) may be further provided on the connecting pipeline 280 to control the on/off state of the connecting pipeline 280, and further control whether the filter device 600 can discharge water outward from the filtered water outlet 6102. In particular, when the filter device 600 discharges sewage outward through the sewage outlet 6103, the connecting pipeline 280 is cut off by the control valve, so that the filtered water outlet 6102 can be prevented from discharging water outward, and then the water in the filter device 600 can only be discharged from the sewage outlet 6103, and the filtered impurities inside the filter device 600 can be more fully discharged.

In this embodiment, the cylinder wall 104 of the water cylinder 100 and the top wall 11 and the left side wall 13 of the box 10 also jointly form a second installation space N, which is located in the upper left area of the box 10 and is arranged opposite to the first installation space M where the switching device 800 is located. The recovery device 500 is arranged in the second installation space N, and there is no need to reserve additional installation space for the recovery device 500 in the box 10, which further ensures the compactness of the internal structure of the box 10.

Specifically, in this embodiment, a detergent dispensing device 300 for dispensing detergent into the water cylinder 100 is disposed in the second installation space N, and the recovery device 500 is integrated with the detergent dispensing device 300. This further improves the compactness of the internal structure of the box 10 and saves the installation space occupied by multiple components inside the box 10.

In this embodiment, the filter device 600 and the switching device 800 are arranged together in the first installation space M naturally formed between the water cylinder 100 and the box 10, and the filter device 600 and the switching device 800 are reasonably arranged in the first installation space M, so that the space utilization rate in the first installation space M is improved, and the compactness of the structure inside the washing apparatus box 10 is increased, which is conducive to miniaturizing the overall volume of the washing apparatus without affecting the volume of the water cylinder 100.

### Embodiment 2

shown in FIGS. 4 to 15, this embodiment provides a switching device 800, including a first valve body 840 and a second valve body 850. The first valve body 840 has a first inlet 8401 and a first outlet 8402, and a first valve plug 841 is disposed inside the first valve body 840 for controlling the on-off between the first inlet 8401 and the first outlet 8402. The second valve body 850 has a second inlet 8501 and a second outlet 8502, and a second valve plug 851 is disposed inside the second valve body for controlling the on-off between the second inlet 8501 and the second outlet 8502.

This embodiment also provides a washing apparatus including the above-mentioned switching device 800, and the washing apparatus can be a washing machine, a washer-dryer, a care machine, or other washing apparatus with a clothing washing function.

Specifically, the washing apparatus further includes a water cylinder 100, a circulating filter pipeline whose water inlet and water outlet are respectively connected to the water cylinder 100, and a filter device 600 arranged on the circulating filter pipeline. The filter device 600 has a sewage outlet 6103 for discharging sewage to the outside, and the sewage outlet 6103 is connected to the sewage pipeline 240 for conveying the discharged sewage.

The first valve body 840 of the switching device 800 is arranged on the circulating filtration pipeline, and the on-off state of the circulating filtration pipeline can be controlled by the first valve plug 841 arranged inside. The second valve body 850 is arranged on the sewage pipeline 240, and the on-off state of the sewage pipeline 240 can be controlled by the second valve plug 851 arranged inside.

Further, the washing apparatus of this embodiment may have the same structure as the washing apparatus described in the Embodiment 1, that is, the first valve body 840 is disposed between the filtered water outlet 6102 of the filter device 600 and the water cylinder 100 on the circulating filtering pipeline, the first inlet 8401 is communicated with the filtered water outlet 6102, and the first outlet 8402 is communicated with the water cylinder 100. The second inlet 8501 of the second valve body 850 is communicated with the sewage outlet 6103 of the filter device 600 through the sewage pipeline 240.

Since the on-off control structure of two independent water circuits in the washing apparatus is integrated on the switching device 800, the water circuit control structure in the washing apparatus can be simplified, saving the space occupied by the water circuit control structure set up to control the on-off of different water circuits inside the washing apparatus.

It is understandable that the first valve body can also be arranged between the water cylinder and the water inlet of the filter device on the circulating filter pipeline, and can also play the role of controlling whether the circulating filter pipeline is conductive through the first valve plug.

Further, similar to the Embodiment 1, the third outlet 8403 is also provided on the first valve body 840 of the switching device 800 in this embodiment, which is used to communicate with the external drainage pipeline 250 of the washing apparatus, and send the filtered water into the external drainage pipeline 250 to be discharged from the washing apparatus. When the first valve plug 841 moves in the first valve body 840, it can control the first outlet 8402 and the third outlet 8403 to be communicated to the first inlet 8401.

In the above solution, the first valve plug 841 moves in the first valve body 840, not only controlling whether the filter device 600 can pass the filtered water into the water cylinder 100, but also controlling whether the filtered water returns to the water cylinder 100 or is discharged from the external drainage pipeline 250. In this way, the circulating filtration and external drainage of the washing apparatus share part of the water channel structure, which is conducive to simplifying the water channel arrangement inside the washing apparatus and saving the space occupied by the water channel structure inside the box 10 of the washing apparatus.

At the same time, the drainage water flow of the washing apparatus is first filtered by the filter device 600 and then discharged from the washing apparatus, so that the drainage water flow does not carry filtered impurities, thereby avoiding the problem that microplastics contained in the filtered impurities are directly discharged with the drainage water flow and enter the ecological cycle, endangering the ecological environment and human health.

In a further solution of this embodiment, the switching device 800 further includes a driving member and a transmission mechanism. The driving member generates movement in a first direction, and can drive the first valve plug 841 to move through the transmission mechanism. The driving member generates movement in a second direction opposite to the first direction, and can drive the second valve plug 851 to move through the transmission mechanism.

In the above scheme, the switching device 800 can be provided with only one driving motor 862, and the driving motor 862 can be controlled to produce driving effects in different directions, so that the driving member changes the direction of movement, and the first valve plug 841 or the second valve plug 851 can be selectively driven to move when the driving member produces different directions of movement. In this way, the on-off state of the circulating filtration pipeline and the on-off state between the sewage outlet 6103 and the outside of the filter device 600 can be controlled by one driving motor 862. On the one hand, the number of driving elements required to control the on-off of the water circuit inside the washing apparatus can be saved, thereby reducing the production cost, and on the other hand, it is also conducive to simplifying the control logic of the on-off of the water circuit.

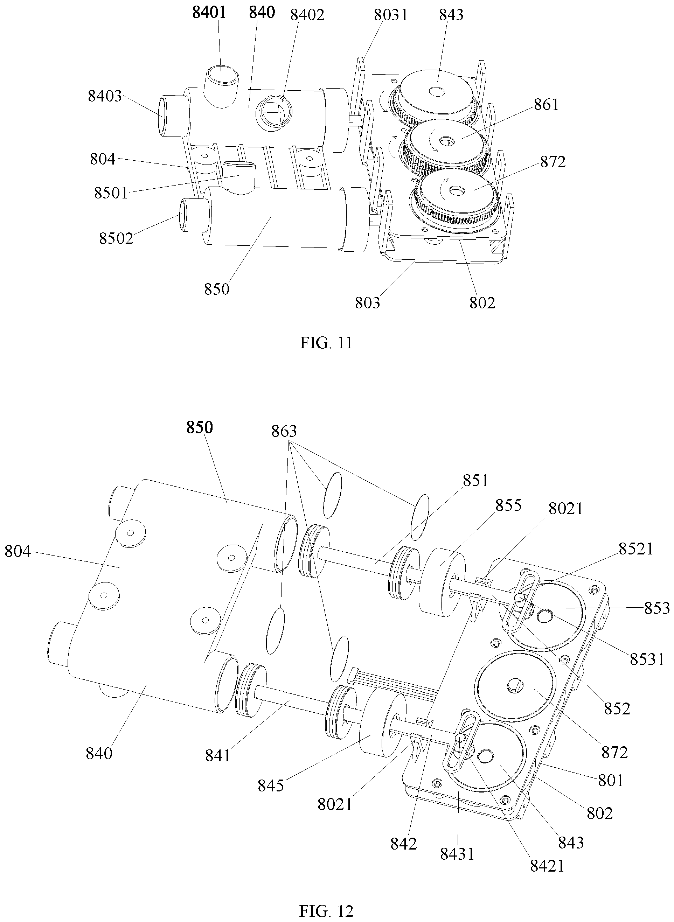

In the specific solution of this embodiment, the driving member includes a driving wheel 861, and the transmission mechanism includes two sets of transmission components, namely a first transmission component that is transmission-connected to the first valve plug 841, and a second transmission component that is transmission-connected to the second valve plug 851. The first transmission component converts the rotation of the driving wheel 861 along the first direction (i.e., the clockwise rotation shown by the solid arrow in FIG. 11) into the movement of the first valve plug 841, and the second transmission component converts the rotation of the driving wheel 861 along the second direction (i.e., the counterclockwise rotation shown by the dotted arrow in FIG. 11) into the movement of the second valve plug 851.

Further, when the driving wheel 861 rotates in the first direction, the first valve plug 841 can be driven to move, while the second valve plug 851 remains stationary. When the driving wheel 861 rotates in the second direction, the second valve plug 851 can be driven to move, while the first valve plug 841 remains stationary.

That is, during the switching of the on-off state of the circulating filtration pipeline, the on-off state between the sewage outlet 6103 and the outside of the filter device 600 is not affected. Similarly, when the on-off state between the sewage outlet 6103 and the outside of the filter device 600 changes, the on-off state of the circulating filtration pipeline is not affected.

The transmission assembly in this embodiment at least includes a transmission wheel 870 and a one-way transmission member 880. The driving wheel 861 can be in transmission connection with the transmission wheel 870, and the one-way transmission member 880 can be driven to rotate or remain stationary by the transmission wheel 870 and the driving wheel 861 rotating together. Alternatively, the driving wheel 861 can also be in transmission connection with the one-way transmission member 880, and the one-way transmission member 880 and the driving wheel 861 rotating together can drive the transmission wheel 870 to rotate or remain stationary.

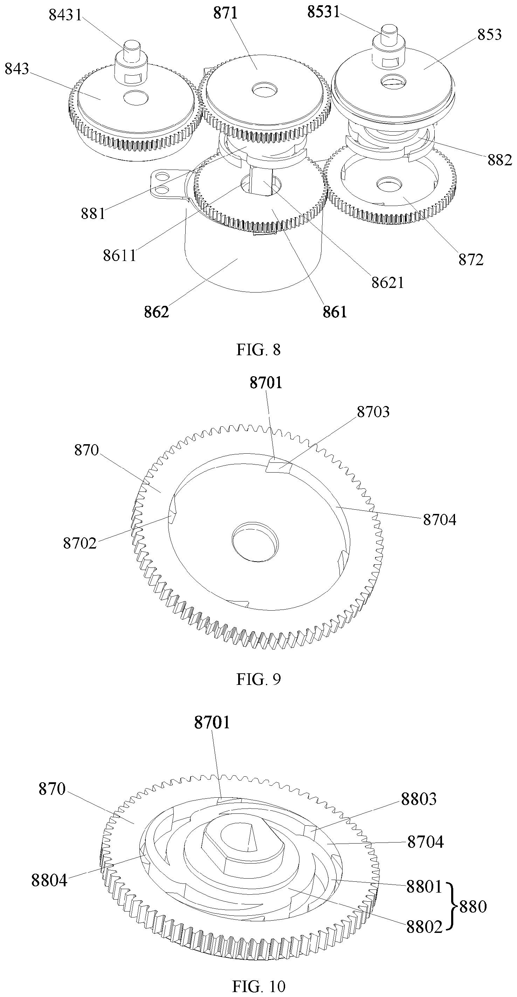

As shown in FIGS. 9 and 10, the transmission wheel 870 has an annular structure, and the one-way transmission member 880 is coaxially arranged inside the annular structure. Specifically, the central area of the upper surface of the transmission wheel 870 is concave to form a cavity for accommodating the one-way transmission member 880, and the periphery of the cavity forms an annular structure. The bottom wall of the cavity can play an axial limiting role for the one-way transmission member 880, ensuring a stable matching relationship between the transmission wheel 870 and the one-way transmission member 880.

A protruding stop part 8701 is provided on the inner circumferential wall 8704 of the annular structure of the transmission wheel 870, and the stop part 8701 has a stop surface 8702 and a release surface 8703, which respectively form a certain angle with the inner circumferential wall 8704 of the annular structure. Preferably, the angle formed between the stop surface 8702 and the inner circumferential wall 8704 is less than 90 degrees, and the angle formed between the release surface 8703 and the inner circumferential wall 8704 is greater than 90 degrees.

The one-way transmission member 880 includes a transmission body 8801 and a pushing body 8802 fixedly arranged on the outer peripheral wall of the transmission body 8801. The outer peripheral wall of the transmission body 8801 is spaced apart from the inner circumferential wall 8704 of the annular structure, and the pushing body 8802 extends obliquely from the outer peripheral wall of the transmission body 8801 to the inner circumferential wall 8704 of the annular structure of the transmission wheel 870.

The extended end of the pushing body 8802 has a pushing surface 8803 facing the stop surface 8702 of the stop part 8701. The one-way transmission member 880 rotates clockwise relative to the transmission wheel 870, and the pushing surface 8803 stops at the stop surface 8702 to produce a pushing effect, thereby driving the transmission wheel 870 and the one-way transmission member 880 to rotate synchronously.

Preferably, the angle between the pushing surface 8803 and the inner circumferential wall 8704 is complementary to the angle between the stop surface 8702 and the inner circumferential wall 8704, so that when the pushing surface 8803 stops against the stop surface 8702, the two can fit completely, achieving a better transmission effect.

The pushing body 8802 has a sliding surface 8804 on the side facing the inner circumferential wall 8704. When the one-way transmission member 880 rotates counterclockwise relative to the transmission wheel 870, the sliding surface 8804 can slide along the release surface 8703 of the stop part 8701, so that the transmission wheel 870 does not rotate with the one-way transmission member 880 and remains stationary.

Preferably, the pushing body 8802 extends along the arc direction, so that the sliding surface 8804 is a convex arc surface. The release surface 8703 of the stop part 8701 is a concave arc surface matching the sliding surface 8804, which can minimize the sliding friction generated between the sliding surface 8804 and the release surface 8703, ensuring that the transmission wheel 870 can remain stationary when the one-way transmission member 880 rotates counterclockwise.

In the preferred solution of this embodiment, a plurality of stop parts 8701 are arranged at intervals along the circumferential direction on the inner circumferential wall 8704 of the annular structure of the transmission wheel 870, and the plurality of stop parts 8701 are evenly distributed along the circumferential direction of the inner circumferential wall 8704. Correspondingly, a plurality of pushing bodys 8802 are arranged on the outer peripheral wall of the transmission body 8801 of the one-way transmission member 880, and the plurality of pushing bodys 8802 are arranged one-to-one correspondingly with the stop parts 8701. When the one-way transmission member 880 rotates clockwise relative to the transmission wheel 870, the pushing bodys 8802 and the stop parts 8701 cooperate one-to-one, and a pushing effect is generated at multiple positions along the circumferential direction, so that the transmission wheel 870 and the one-way transmission member 880 rotate synchronously.

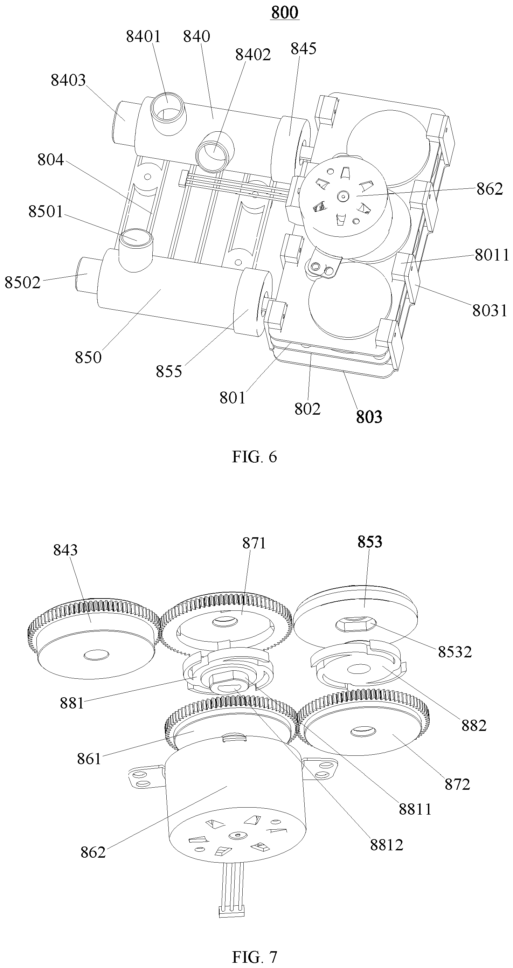

In a further solution of this embodiment, as shown in Fig. 7, Fig. 8 and Fig. 12, the first transmission assembly at least includes a first transmission wheel 871 and a first one-way transmission member 881 which are coaxially arranged, and a first output wheel 843 for transmitting to the first valve plug 841. The second transmission assembly at least includes a second transmission wheel 872 and a second one-way transmission member 882 which are coaxially arranged, and a second output wheel 853 for transmitting to the second valve plug 851.

Specifically, the first one-way transmission member 881 is coaxially arranged with the driving wheel 861, located on the upper side of the driving wheel 861, and is connected to the driving wheel 861 through a circumferential limiting structure, so that the driving wheel 861 rotates synchronously with the first one-way transmission member 881. The first transmission wheel 871 is located on the upper side of the first one-way transmission member 881, and the first output wheel 843 is arranged on the left side of the outer periphery of the first transmission wheel 871, and is connected to the first transmission wheel 871, and can rotate with the first transmission wheel 871.

The second transmission wheel 872 is arranged on the right side of the outer periphery of the driving wheel 861, and is in transmission connection with the driving wheel 861, and can rotate with the driving wheel 861. The second one-way transmission member 882 is located on the upper side of the second transmission wheel 872, and the second output wheel 853 is coaxially arranged with the second one-way transmission member 882, and is located on the upper side of the second one-way transmission member 882, and is in transmission connection with the second one-way transmission member 882 through a circumferential limiting structure, so that the second output wheel 853 and the second one-way transmission member 882 rotate synchronously.

In the above scheme, the first one-way transmission member 881 and the pushing surface 8803 of the pushing body 8802 on the second one-way transmission member 882 face opposite directions, so that when the driving wheel 861 rotates in different directions, it can selectively drive the first output wheel 843 or the second output wheel 853 to rotate.

According to the above positional relationship, the second output wheel 853 is located on the right side of the outer periphery of the first transmission wheel 871, and the upper surfaces of the first output wheel 843 and the second output wheel 853 are arranged coplanar. The first output wheel 843 and the second output wheel 853 are used to transmit to the first valve plug 841 and the second valve plug 851 respectively, and the first output wheel 843 and the second output wheel 853 are arranged symmetrically relative to the first transmission wheel 871, so that the switching device 800 is easier to form a symmetrical structure, making its overall structure more regular, and facilitating the installation of the switching device 800 in the washing apparatus.

In detail, the lower surface of the first one-way transmission member 881 is provided with a raised external spline 8811, and the driving wheel 861 is provided with an internal spline 8611 matching the external spline 8811, and the external spline 8811 is inserted into the internal spline 8611, so that the driving wheel 861 and the first one-way transmission member 881 can rotate synchronously. The upper surface of the second one-way transmission member 882 is provided with a raised external spline, and the second output wheel 853 is provided with an internal spline 8532 matching the external spline, and the external spline on the second one-way transmission member 882 is inserted into the internal spline 8532, so that the second output wheel 853 can rotate synchronously with the second one-way transmission member 882.

The driving motor 862 is arranged below the driving wheel 861 and has an output end 8621 extending upward. An internal spline 8812 matching the output end 8621 is arranged in the middle of the first one-way transmission member 881. The center of the driving wheel 861 has an opening, and the output end 8621 passes through the driving wheel 861 and is inserted into the internal spline 8812. The driving motor 862 directly drives the first one-way transmission member 881 to generate movement in different directions, and drives the driving wheel 861 to rotate synchronously therewith.

Taking the position shown in FIG. 8 as an example, the driving motor 862 drives the first one-way transmission member 881 to rotate counterclockwise, which can drive the first transmission wheel 871 to rotate counterclockwise synchronously, and then drive the first output wheel 843 to rotate clockwise, so that the first valve plug 841 connected thereto can move. The driving wheel 861 rotates synchronously with the first one-way transmission member 881, driving the second transmission wheel 872 on the right to rotate clockwise. At this time, the second one-way transmission member 882 does not rotate with the second transmission wheel 872 and remains stationary, so that the second output wheel 853 is also stationary and does not drive the second valve plug 851 to move.

When the driving motor 862 drives the first one-way transmission member 881 to rotate clockwise, the first transmission wheel 871 does not rotate with the first one-way transmission member 881 and remains stationary, so that the first output wheel 843 is also stationary and does not drive the first valve plug 841 to move. The driving wheel 861 rotates synchronously with the first one-way transmission member 881, driving the second transmission wheel 872 on the right side to rotate counterclockwise, and then driving the second one-way transmission member 882 to rotate synchronously counterclockwise, so that the second output wheel 853 on the upper side also rotates synchronously counterclockwise, transmitting power to the second valve plug 851 to make it move.

In this embodiment, gear structures are arranged on the peripheries of the driving wheel 861, the second transmission wheel 872, the first transmission wheel 871 and the first output wheel 843. The second transmission wheel 872 rotates with the driving wheel 861 through gear transmission, and the first output wheel 843 also rotates with the first transmission wheel 871 through gear transmission. The second output wheel 853 is arranged on the right side of the first transmission wheel 871, but no gear structure is arranged on its periphery, and it is not subject to the transmission effect of the first transmission wheel 871.

In another solution of this embodiment, a belt transmission method can also be used between the driving wheel and the second transmission wheel, and between the first transmission wheel and the first output wheel, which can also play the same role. However, it should be noted that since the transmission directions of the gear transmission and the belt transmission are opposite, it is necessary to set the pushing surfaces of the pushing bodies on the first one-way transmission member and the second one-way transmission member to face the same direction, so that when the driving wheel rotates in different directions, it can selectively drive the first output wheel or the second output wheel to rotate.

In a further solution of this embodiment, the first valve plug 841 is reciprocatingly arranged inside the first valve body 840, thereby connecting/disconnecting the communication between the first inlet 8401 and the first outlet 8402. In order to realize the transmission of the first output wheel 843 to the first valve plug 841, the first transmission assembly also includes a first connecting rod 842 connected to the first output wheel 843. The first connecting rod 842 extends along the reciprocating direction of the first valve plug 841, one end of which is connected to the first valve plug 841, and the other end of which is provided with a first slideway 8421 extending in a direction perpendicular to the first connecting rod 842. A first protrusion 8431 is eccentrically arranged on the surface of the first output wheel 843 facing away from the driving wheel 861, and the first protrusion 8431 is slidably arranged in the first slideway 8421.

The first output wheel 843 rotates to make the first protrusion 8431 slide back and forth along the first slideway 8421, and at the same time drive the first slideway 8421 to reciprocate along the extension direction of the first connecting rod 842, thereby driving the first valve plug 841 to reciprocate in the first valve body 840.

Similarly, the second valve plug 851 is reciprocatingly disposed inside the second valve body 850, thereby connecting/disconnecting the communication between the second inlet 8501 and the second outlet 8502. The second transmission assembly further includes a second connecting rod 852 connected to the second output wheel 853, the second connecting rod 852 extending along the reciprocating direction of the second valve plug 851, one end of which is connected to the second valve plug 851, and the other end of which is provided with a second slideway 8521 extending in a direction perpendicular to the second connecting rod 852. A second protrusion 8531 is eccentrically disposed on the surface of the second output wheel 853 facing away from the driving wheel 861, and the second protrusion 8531 is slidably disposed in the second slideway 8521.

The second output wheel 853 rotates to make the second protrusion 8531 slide back and forth along the second slideway 8521, and at the same time drive the second slideway 8521 to reciprocate along the extension direction of the second connecting rod 852, thereby driving the second valve plug 851 to reciprocate in the second valve body 850.

In detail, the first protrusion 8431 and the second protrusion 8531 are both stepped columnar structures, the small diameter section of the stepped columnar structure is slidably arranged in the corresponding first slideway 8421 and the second slideway 8521, and the end surface where the large diameter section and the small diameter section meet is arranged in contact with the corresponding first slideway 8421 and the second slideway 8521, playing a supporting role. In this way, the first slideway 8421 is prevented from directly contacting the first output wheel 843, or the second slideway 8521 is prevented from directly contacting the first output wheel 843, or the second output wheel 853, and the excessive contact area between the two increases the friction force, which affects the smooth rotation of the first output wheel 843 and the second output wheel 853.

In a specific solution of this embodiment, the first valve body 840 has a certain extension length along the movement direction of the first valve plug 841, the third outlet 8403 is arranged on the left end wall of the first valve body 840, and the first inlet 8401 and the first outlet 8402 are arranged on the side wall of the first valve body 840. Along the length extension direction of the first valve body 840, the first inlet 8401 is located between the first outlet 8402 and the third outlet 8403.

Preferably, the first inlet 8401 and the first outlet 8402 are staggered along the circumference of the first valve body 840 to increase the distance between the first inlet 8401 and the first outlet 8402, so that the first inlet 8401 and the first outlet 8402 can be connected to corresponding pipeline structures respectively without affecting each other.

The first valve plug 841 includes a switching part 8411 disposed at the left end, a first sealing part 8413 disposed at the right end, and a first connecting part 8412 for connecting the switching part 8411 and the first sealing part 8413. A sealing ring 863 is sleeved on both the switching part 8411 and the first sealing part 8413, thereby sealing with the inner side of the side wall of the first valve body 840 in the circumferential direction. The first connecting part 8412 is a columnar structure, and the side surface of the first connecting part 8412 is spaced apart from the inner surface of the side wall of the first valve body 840.

In FIG. 4, FIG. 13 and FIG. 15, during the circulation filtering process of the washing apparatus, the first valve plug 841 is located at the leftmost end of the first valve body 840, and the switching part 8411 abuts against the left end wall of the first valve body 840, blocking the third outlet 8403. The first inlet 8401 and the first outlet 8402 are both located between the switching part 8411 and the first sealing part 8413, and the two are in a conducting state. After the water in the water cylinder 100 is filtered by the filter device 600 and enters the first valve body 840, it can flow out from the first outlet 8402 and return to the water cylinder 100.

When the washing apparatus drains water, the first valve plug 841 is driven to move rightward, so that the switching part 8411 is separated from the left end wall of the first valve body 840, and the third outlet 8403 is opened. The switching part 8411 finally moves between the first inlet 8401 and the first outlet 8402, so that the connection between the first inlet 8401 and the first outlet 8402 is cut off, and the third outlet 8403 is communicated to the first inlet 8401. After the water in the water cylinder 100 is filtered by the filter device 600 and enters the first valve body 840, it flows out from the third outlet 8403 and is discharged through the external drainage pipeline 250.

A first valve cover 845 is provided at the right end of the first valve body 840 to seal the interior of the first valve body 840, and the first connecting rod 842 passes through the first valve cover 845 and is connected to the first sealing part 8413 of the first valve plug 841. The interior of the first valve body 840 is divided into two mutually unconnected left and right spaces by the first sealing part 8413, so that water will not enter the space on the right side of the first sealing part 8413. On the one hand, it avoids water leakage at the position where the first connecting rod 842 passes through the first valve cover 845, and on the other hand, it makes the installation environment of the first connecting rod 842 a waterless environment, and it can also avoid the problem that the filtered impurities such as wire scraps in the water are entangled with the first connecting rod 842, thereby affecting the smooth movement of the first valve plug 841 in the first valve body 840.

Similarly, in this embodiment, the second valve body 850 of the switching device 800 has a certain extension length along the movement direction of the second valve plug 851, the second outlet 8502 is arranged on the left end wall of the second valve body 850, and the second inlet 8501 is arranged on the side wall of the second valve body 850.

The second valve plug 851 includes a blocking part 8511 disposed at the left end, a second sealing part 8513 disposed at the right end, and a second connecting part 8512 for connecting the blocking part 8511 and the second sealing part 8513. A sealing ring 863 is sleeved on each of the blocking part 8511 and the second sealing part 8513, thereby sealing the inner side of the side wall of the second valve body 850 in the circumferential direction. The second connecting part 8512 is a columnar structure, and the side surface of the second connecting part 8512 is spaced apart from the inner surface of the side wall of the second valve body 850.

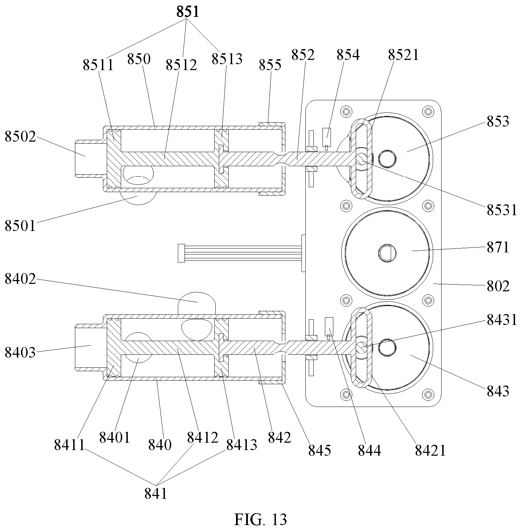

In FIG. 4, FIG. 13 and FIG .14, during the circulating filtration process of the washing apparatus, the second inlet 8501 and the second outlet 8502 on the second valve body 850 are cut off by the second valve plug 851, so that the filter device 600 cannot discharge water outward from the sewage outlet 6103. Specifically, the second valve plug 851 is located at the leftmost end of the second valve body 850, and the blocking part 8511 abuts against the left end wall of the second valve body 850 to block the second outlet 8502.

When the filter device 600 discharges sewage, the second valve plug 851 is driven to the right, so that the blocking part 8511 is separated from the left end wall of the second valve body 850, and the second outlet 8502 is opened. The blocking part 8511 eventually moves to the right side of the second inlet 8501, so that the second inlet 8501 is connected to the second outlet 8502, and the sewage carrying the filtered impurities in the filter device 600 can be discharged from the sewage outlet 6103.

A second valve cover 855 is provided at the right end of the second valve body 850 to seal the interior of the second valve body 850, and the second connecting rod 852 passes through the second valve cover 855 and is connected to the second sealing part 8513 of the second valve plug 851. The interior of the second valve body 850 is divided into two mutually unconnected left and right spaces by the second sealing part 8513, so that water will not enter the space on the right side of the second sealing part 8513. On the one hand, it avoids water leakage at the position where the second connecting rod 852 passes through the second valve cover 855, and on the other hand, it makes the installation environment of the second connecting rod 852 a waterless environment, and it can also avoid the problem that the filtered impurities such as wire scraps in the water are entangled with the second connecting rod 852, thereby affecting the smooth movement of the second valve plug 851 in the second valve body 850.

Furthermore, in this embodiment, the first valve body 840 and the second valve body 850 are connected as one body through the valve body connecting part 804 of the plate-like structure, so that the overall structure of the switching device 800 is more stable. Preferably, the first valve body 840, the second valve body 850 and the valve body connecting part 804 are integrally formed. As shown in FIG. 5 , the switching device 800 is fixed to the plate-shaped part 22 through the valve body connecting part 804.

In a further solution of this embodiment, the switching device 800 is also provided with a mounting structure for fixing the transmission mechanism.

Specifically, the mounting structure includes a first mounting plate 801, a second mounting plate 802 and a third mounting plate 803 which are arranged in sequence. The driving motor 862 is arranged on the side of the first mounting plate 801 which faces away from the second mounting plate 802. The driving wheel 861, the first transmission wheel 871, the first one-way transmission member 881, the first output wheel 843, the second transmission wheel 872, the second one-way transmission member 882 and the second output wheel 853 are arranged as a whole between the first mounting plate 801 and the second mounting plate 802. The first protrusion 8431 and the second protrusion 8531 protrude from the surface of the second mounting plate 802.

The right ends of the first connecting rod 842 and the second connecting rod 852 are arranged between the second mounting plate 802 and the third mounting plate 803, so that the first slideway 8421 and the second slideway 8521 are correspondingly sleeved on the first protrusion 8431 and the second protrusion 8531. A guide portion 8021 is arranged on the surface of the second mounting plate 802 facing the third mounting plate 803, and the guide portion 8021 forms a guide channel, and the first connecting rod 842 and the second connecting rod 852 are respectively limited in the guide channels formed by the corresponding guide portions 8021.

A connecting column is provided between the first mounting plate 801 and the second mounting plate 802, and the first mounting plate 801 and the second mounting plate 802 can be connected and fixed by screws or similar connecting members. A plurality of mounting plate connecting parts 8011 protruding from the surface of the first mounting plate 801 facing away from the second mounting plate 802 are provided at intervals along the outer periphery thereof, and a plurality of mounting plate fixing portions 8031 of a plate-like structure extending toward the first mounting plate 801 are correspondingly provided on the outer periphery of the third mounting plate 803. The mounting plate connecting parts 8011 and the mounting plate fixing portions 8031 are connected by screws or other connecting members, so that the first mounting plate 801 and the second mounting plate 802 can be connected and fixed to the third mounting plate 803 as a whole.

In this embodiment, during the washing/rinsing process of the washing apparatus, the switching device 800 is in the circulating filtering state shown in FIG. 13, that is, the first valve plug 841 blocks the third outlet 8403 and communicates the first inlet 8401 and the first outlet 8402, and the second valve plug 851 blocks the second outlet 8502. The water in the water cylinder 100 is driven by the circulation pump 400 to enter the filter device 600 for filtration, and the filtered water enters the first valve body 840 and flows out from the first outlet 8402, and finally returns to the water cylinder 100.

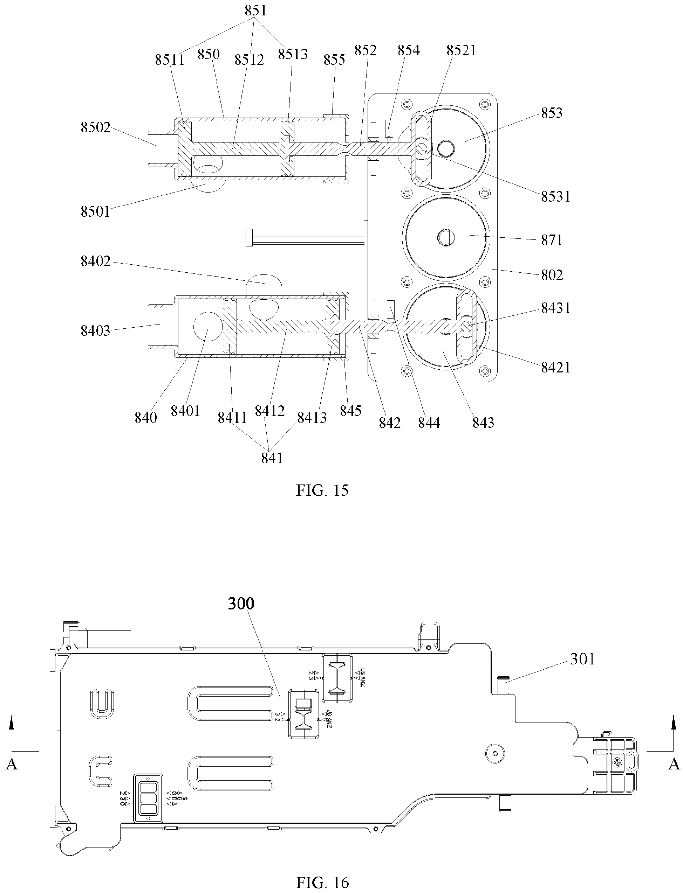

When the washing apparatus is draining water, the driving motor 862 drives the first one-way transmission member 881 to rotate in one direction, driving the first valve plug 841 to move, so that the switching device 800 switches to the draining state shown in FIG. 15, that is, the first valve plug 841 communicates the first inlet 8401 and the third outlet 8403, the first outlet 8402 is not connected to the first inlet 8401, and the second valve plug 851 remains stationary to block the second outlet 8502. The water in the water cylinder 100 is driven by the circulation pump 400 to enter the filter device 600 for filtration, and the filtered water enters the first valve body 840 and flows out from the third outlet 8403, and finally discharged from the washing machine through the external drainage pipeline 250. After the drainage is completed, the first one-way transmission member 881 can be driven by the driving motor 862 to rotate in the same direction, so that the first valve plug 841 is reset to the leftmost end of the first valve body 840.

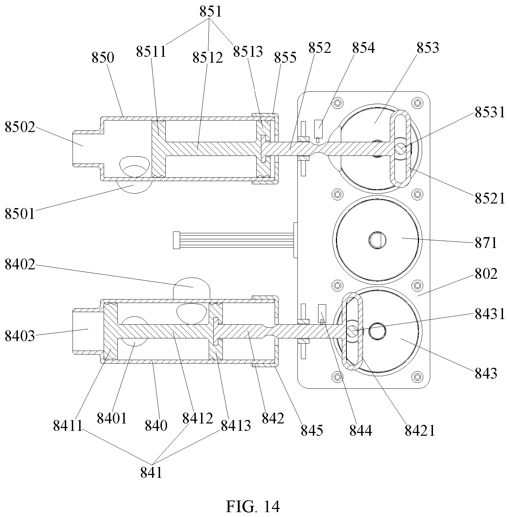

When the filter device 600 needs to discharge sewage, the driving motor 862 drives the first one-way transmission member 881 to rotate in the other direction, driving the second valve plug 851 to move, so that the switching device 800 switches to the sewage discharge state shown in FIG. 14, that is, the second valve plug 851 opens the second outlet 8502 to make it communicate with the second inlet 8501, and the first valve plug 841 remains stationary during the above process. After the sewage in the filter device 600 is discharged from the sewage outlet 6103 and enters the second valve body 850, it can be discharged through the second outlet 8502.

In this embodiment, the switching device 800 can output two driving forces in different directions through a driving motor 862 through the transmission action of the transmission mechanism, thereby selectively driving the first valve plug 841 or the second valve plug 851 to move, thereby selectively changing the connection state of the first valve body 840 or the second valve body 850. The first valve body 840 and the second valve body 850 are respectively connected to the waterway structure of the washing apparatus for realizing different functions, thereby realizing the control of the on-off state of different waterway structures by a driving motor 862. By reducing the use of driving elements in the washing apparatus, the cost is reduced and the installation space is saved. At the same time, only the direction of the driving force output by the driving motor 862 needs to be controlled, and the control logic of the complex waterway on-off is simplified.

### Embodiment 3

This embodiment provides a control method for the washing apparatus described in the Embodiment 2 above.

In conjunction with FIG. 4 to FIG. 15 , the control method includes:
the driving motor 862 rotates in the first direction, and drives the first valve plug 841 to move through the transmission mechanism, thereby changing the on-off state of the circulating filtration pipeline, and the second valve plug 851 remains stationary;
the driving motor 862 rotates in a second direction opposite to the first direction, and drives the second valve plug 851 to move through the transmission mechanism, thereby changing the on-off state of the sewage pipelineline 240, and the first valve plug 841 remains stationary.

Taking the directions shown in FIG. 6 and FIG. 11 as an example, the first direction described in this embodiment is the clockwise direction shown by the solid arrow in FIG. 11 , and the second direction is the counterclockwise direction shown by the dotted arrow in FIG. 11 .

In the above scheme, by controlling the rotation direction of the driving motor 862, the on/off state of the circulating filtering pipeline and the sewage pipeline 240 can be selectively controlled, and the control logic is simple and easy.

In this embodiment, the switching device 800 has at least three working states: a circulating filtering state, a draining state, and a sewage discharge state. In the circulating filtering state, the first inlet 8401 is communicated to the first outlet 8402, thereby communicating the circulating filtering pipeline. In the draining state, the first inlet 8401 is communicated to the third outlet 8403, thereby communicating the water cylinder 100 and the external drainage pipeline 250. In the sewage discharge state, the second inlet 8501 and the second outlet 8502 are communicated, thereby communicating the sewage discharge pipeline 240. In the circulating filtering state and the draining state, the communication between the second inlet 8501 and the second outlet 8502 on the second valve body 850 is cut off by the second valve plug 851.

The control method of the washing apparatus includes: driving the motor 862 to rotate in a first direction, driving the first valve plug 841 to move through the transmission mechanism, and switching the switching device 800 between the circulating filtering state and the draining state.

In the specific solution of this embodiment, in the initial state, the switching device 800 conducts the circulating filtration pipeline of the washing apparatus and cuts off the sewage pipeline 240. That is, the normal state of the switching device 800 in this embodiment is the circulating filtrating state.

The control method of the washing apparatus specifically comprises the following steps:
S11, in the initial state, the switching device 800 turns on the circulating filtering pipeline;
S12, the washing apparatus receives a draining instruction, drives the motor 862 to rotate in a first direction, and the switching device 800 switches to a draining state;
S13, the drainage process ends, the driving motor 862 rotates in the first direction again, and the switching device 800 returns to the circulating filtering state.

Further, in step S12, when the switching device 800 is switched to the draining state, the driving motor 863 stops rotating, controls the circulation pump 400 to start, and drives the water in the water cylinder 100 to flow to the external drainage pipeline 250 to complete the drainage process of the washing apparatus.

In a further scheme of this embodiment, in order to determine whether the first valve plug 841 has moved into place when the switching device 800 switches between the circulation filtration state and the draining state, thereby controlling the timing when the drive motor 862 stops rotating, the switching device 800 is provided with a first position switch 844 for detecting the movement position of the first valve plug 841.

Specifically, two first triggering parts for triggering the first position switch 844 are provided on the first valve plug 841 or the transmission mechanism, and the two first triggering parts correspond to the circulating filtering state and the draining state of the switching device respectively. When the driving motor 862 rotates in the first direction, if a signal that the first position switch 844 is triggered is received, it is determined that the first valve plug 841 has moved to the right position.

The corresponding control method is as follows: in step S12 and step S13, if a signal indicating that the first position switch 844 is triggered is received, the driving motor 862 stops rotating.

In detail, as shown in FIGS. 13 to 15, the first triggering part is a concave structure arranged on the side wall of the first connecting rod 842 (only the first triggering part corresponding to the draining state is shown in the figure). The first position switch 844 is arranged on the second mounting plate 802 and is located on one side of the first connecting rod 842.

In one implementation of this embodiment, the first position switch 844 is a touch switch, and the touch switch has a micro-movement sheet in contact with the side wall of the first connecting rod 842. During the process of switching the switching device 800 from the circulating filtering state shown in FIG. 13 to the draining state shown in FIG. 15, the micro-movement sheet always keeps in contact with the first connecting rod 842. When the first connecting rod 842 moves to the rightmost position shown in FIG. 15, the concave structure on the first connecting rod 842 corresponds to the position of the micro-movement sheet, and the micro-movement sheet is no longer in contact with the first connecting rod 842, that is, a signal that the first position switch 844 is triggered is generated, and the driving motor 862 is controlled to stop rotating.

Similarly, when the switching device 800 switches from the draining state shown in FIG. 15 to the circulating filtering state shown in FIG. 13, the micro-movement piece also always keeps in contact with the first connecting rod 842. When the first connecting rod 842 moves to the leftmost position shown in FIG. 13, the position of the micro-movement piece just corresponds to another concave structure (not shown in the figure) on the first connecting rod 842, so that the micro-movement piece is no longer in contact with the first connecting rod 842, that is, a signal that the first position switch 844 is triggered is generated, and the driving motor 862 is controlled to stop rotating.

In another implementation of this embodiment, the first position switch 844 is a photoelectric sensor that can emit a light signal to detect and receive the time required for the reflection signal, thereby determining the distance to the front obstruction. During the process of the switching device 800 switching from the circulating filtering state shown in FIG. 13 to the draining state shown in FIG. 15, since the distance between the first position switch 844 and the side wall of the first connecting rod 842 remains unchanged, the time required for the first position switch 844 to receive the reflection signal remains unchanged. When the first connecting rod 842 moves to the rightmost position shown in FIG. 15, the concave structure on the first connecting rod 842 corresponds to the position of the first position switch 844, and then the distance between the first position switch 844 and the side wall of the first connecting rod 842 increases, causing a sudden change in the time required to receive the reflection signal, i.e., generating a signal that the first position switch 844 is triggered, and at this time, the control driving motor 862 stops rotating.

Similarly, during the process of the switching device 800 switching from the draining state shown in FIG. 15 to the circulating filtering state shown in FIG. 13, the time required for the first position switch 844 to receive the reflection signal remains unchanged. When the first connecting rod 842 moves to the leftmost position shown in FIG. 13, the position of the first position switch 844 just corresponds to another concave structure (not shown in the figure) on the first connecting rod 842, so that the time required to receive the reflection signal suddenly changes, that is, a signal that the first position switch 844 is triggered is generated, and the driving motor 862 is controlled to stop rotating at this time.

In the above solution, only one first position switch 844 is provided in the switching device 800, and in cooperation with the two first triggering parts provided on the first connecting rod 842, it is possible to detect whether the first valve plug 841 moves to the right position in the two working states of the circulating filtering state and the draining state of the switching device 800. At the same time, when the switching device 800 switches to different working states, the feedback signal of the first position switch 844 when being triggered is the same.

On the one hand, the above configuration can reduce the number of detection elements used, which is conducive to cost saving. On the other hand, the drive motor 862 does not need to determine which working state the current switching device 800 is to switch to, and stops rotating as soon as it receives the signal that the first position switch 844 is triggered, and the control logic is simpler.

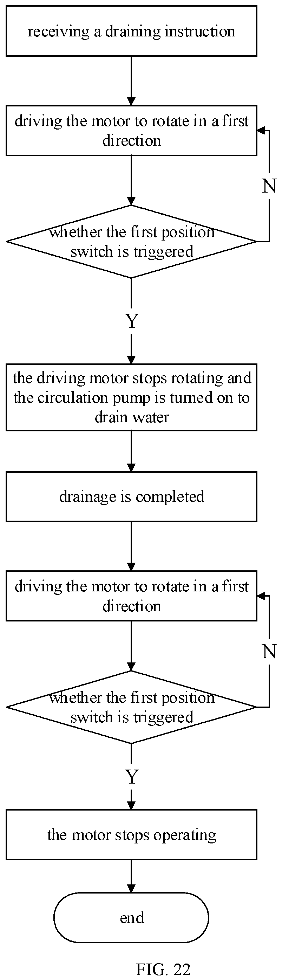

In detail, as shown in FIG. 22 , the drainage process of the washing apparatus in this embodiment specifically includes the following steps:
a1) The washing apparatus receiving a draining instruction;
a2) Driving the motor to rotate in a first direction;
a3) Determining whether the first position switch is triggered, if so, executing step a4), otherwise returning to step a2);
a4) The driving motor stops rotating and the circulation pump is turned on to drain water;
a5) Drainage is completed;
a6) Driving the motor to rotate in a first direction;
a7) Determining whether the first position switch is triggered, if so, the process ends, otherwise returning to step a6).

In this embodiment, in order to realize the operation of the filter device 600 to discharge sewage, the control method further includes the following steps:
S21, in the initial state, the switching device 800 cutting off the sewage pipeline 240;
S22, the washing apparatus receiving the sewage discharge instruction, driving the motor 862 to rotate in the second direction, and communicating the sewage discharge pipeline 240;
S23, the sewage discharge process ends, and the driving motor 862 rotating in the second direction again to cut off the sewage discharge pipeline 240.

Preferably, in step S22, when the switching device 800 is switched to the sewage discharge state, that is, after the sewage discharge pipeline 240 is connected, the circulation pump 400 is controlled to be turned on, thereby driving the sewage in the filter device 600 to be discharged.

In the above scheme, the circulation pump 400 is not only used for the circulation filtering process and drainage process of the washing apparatus, but also provides driving force in the sewage discharge process of the filter device 600. Without adding additional power, it can ensure that during the sewage discharge process, the sewage carrying filtered impurities in the filter device 600 can be fully discharged, reducing the residual filtered impurities.

In a further solution of this embodiment, in order to determine whether the second valve plug has moved into place when the switching device 800 connects and disconnects the sewage pipeline 240, thereby controlling the timing for the drive motor 862 to stop rotating, the switching device 800 is provided with a second position switch 854 for detecting the movement position of the second valve plug 851.

Specifically, two second triggering parts for triggering the second position switch 854 are provided on the second valve plug 851 or the transmission mechanism, and the two second triggering parts respectively correspond to the on state and the off state of the sewage discharge pipeline 240. When the driving motor 862 rotates in the second direction, if a signal that the second position switch 854 is triggered is received, it is determined that the second valve plug 851 has moved to the right position.

The corresponding control method is as follows: in step S22 and step S23, if a signal indicating that the second position switch 854 is triggered is received, the driving motor 862 stops rotating.

As shown in FIGS. 13 to 15, similar to the first trigger part, the second trigger part is a concave structure arranged on the side wall of the second connecting rod 852 (only the second trigger part corresponding to the sewage discharge state is shown in the figure). The second position switch 854 is arranged on the second mounting plate 802 and is located on one side of the second connecting rod 852.

In this embodiment, the second position switch 854 may also be a touch switch or a photoelectric sensor.

In the case where the second position switch 854 is a touch switch, when the second connecting rod 842 is at any position between the leftmost end and the rightmost end, the micro-moving piece of the touch switch is in contact with the side wall of the second connecting rod 842. When the second connecting rod 842 moves to the leftmost end or the rightmost end, the presence of the concave structure causes the micro-moving piece of the touch switch to no longer contact with the second connecting rod 842 and be released, thereby generating a signal that the second position switch 854 is triggered, and at this time, the control driving motor 862 stops rotating.

In the case where the second position switch 854 is a light sensor, when the second connecting rod 842 is at any position between the leftmost end and the rightmost end, the time required for the second position switch 854 to receive the reflected signal remains unchanged. When the second connecting rod 842 moves to the leftmost end or the rightmost end, the presence of the concave structure causes a sudden change in the distance between the second position switch 854 and the second connecting rod 852, and then a sudden change in the time required to receive the reflected signal, i.e., a signal that the second position switch 854 is triggered is generated, and at this time, the driving motor 862 is controlled to stop rotating.

In the above solution, the switching device 800 can detect whether the second valve plug 851 moves to the right position in the two working states of the switching device 800 connecting and disconnecting the sewage pipeline 240 through a second position switch 854, and the feedback signal of the second position switch being triggered in the two working states is the same. On the one hand, the number of detection elements used is reduced, the cost is reduced, and on the other hand, the control logic can be simplified.

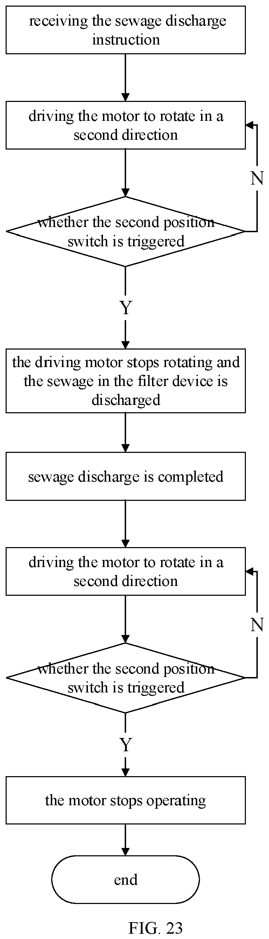

In detail, as shown in FIG. 23, the sewage discharge process of the filter device in the washing apparatus in this embodiment specifically includes the following steps:
b1) The washing apparatus receiving the sewage discharge instruction;
b2) Driving the motor to rotate in a second direction;
b3) Determining whether the second position switch is triggered, if so, executing step b4), otherwise returning to step b2);
b4) The driving motor stops rotating and the sewage in the filter device is discharged;
b5) Sewage discharge is completed;
b6) Driving the motor to rotate in a second direction;
b7) Determining whether the second position switch is triggered, if so, the process ends, otherwise returns to step b6).

In this embodiment, the above sewage discharge process is performed at least once during a complete washing program of the washing apparatus.

### Embodiment 4

In FIG. 4 to FIG. 15, the difference between this embodiment and the Embodiment 3 is that in the initial state, the switching device 800 communicates the water cylinder 100 and the external drainage pipeline 250, and cuts off the sewage drainage pipe 240. That is, the normal state of the switching device 800 in this embodiment is the draining state.

The control method of the washing machine in this embodiment specifically includes the following steps:
S11', In the initial state, the switching device 800 communicating the water cylinder 100 and the external drainage pipeline 250;
S12', The washing apparatus receiving a circulation filtering instruction, drives the motor 862 to rotate in a first direction, and the switching device 800 switching to a circulating filtering state;
S13', The circulating filtering process ends, the driving motor 862 rotates in the first direction again, and the switching device 800 returns to the draining state.

Furthermore, in step S12', when the switching device 800 is switched to the circulating filtering state, the driving motor 863 stops rotating, controls the circulation pump 400 to start, and drives the water in the water cylinder 100 to circulate through the filter device 600 to complete the circulation filtering process of the washing apparatus.

In this embodiment, the method for determining whether the first valve plug 841 has moved into place is the same as that in the above-mentioned Embodiment 3 and will not be described in detail.

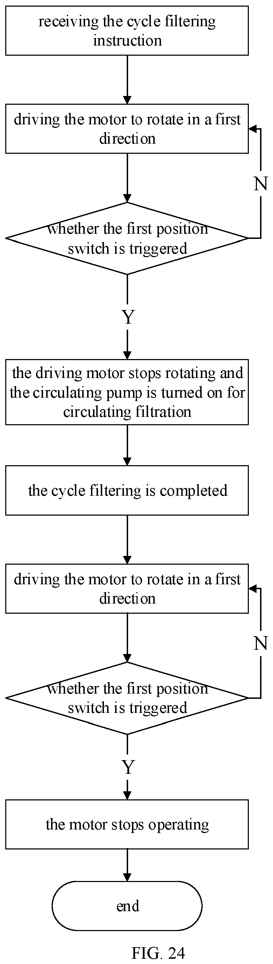

In detail, as shown in FIG. 24, the circulating filtration process of the washing apparatus in this embodiment specifically includes the following steps:
c1) The washing apparatus receiving the cycle filtering instruction;
c2) Driving the motor to rotate in a first direction;
c3) Determining whether the first position switch is triggered, if so, executing step c4), otherwise return to step c2);
c4) The driving motor stops rotating and the circulating pump is turned on for circulating filtration;
c5) The cycle filtering is completed;
c6) Driving the motor to rotate in a first direction;
c7) Determining whether the first position switch is triggered, if so, the process ends, otherwise return to step c6).

### Embodiment 5

As shown in FIGS. 1 to 17, this embodiment is a further limitation of the above-mentioned Embodiment 1, and the recovery device 500 is disposed inside the water groove 310 of the detergent dispensing device 300.

Specifically, the water groove 310 is communicated to the water cylinder 100, and the recovery device 500 includes a debris collection assembly 560 disposed inside the water groove 310. The debris collection assembly 560 receives the sewage discharged by the filter device 600 for filtering, collects the filtered impurities in the sewage, and the filtered water enters the water groove 310.

The detergent dispensing device 300 is used to dispense detergent into the water cylinder 100. A drainage port 302 is provided on the bottom wall 311 of the water groove 310 and is communicated to the water cylinder 100 through a pipeline. The detergent to be dispensed is mixed with the water inlet of the washing machine and enters the water groove 310, and then dispensed into the water cylinder 100 through the drainage port 302.

The sewage discharged by the filter device 600 is received by the debris collection assembly 560, and the debris collection assembly 560 can filter the sewage and collect the filtered impurities therein inside the debris collection assembly 560. The water after filtering and removing the filtered impurities can be discharged into the water groove 310, and enter the water cylinder 100 from the drainage port 302, and be used in the subsequent washing process of the washing apparatus, or be discharged with the drainage water flow of the washing apparatus.

In the above scheme, the recovery device 500 can filter the received sewage through the debris collection assembly 560, thereby separating the filtered impurities from the water, making it easy for the user to clean the filtered impurities in the recovery device 500, and avoiding the problem that the filtered impurities are mixed with water and the user is difficult to handle them. The filtered impurities are collected by the debris collection assembly 560, and the water without filtered impurities can be passed into the water cylinder 100 through the water groove 310 of the detergent dispensing device 300. The water flow passed into the recovery device 500 can be discharged in real time, and the volume of the recovery device 500 does not need to be set too large, and the problem of overflow of the recovery device 500 will not be caused.

Furthermore, the debris collection assembly 560 includes a filter frame 561 and a filter screen. The filter frame 561 is detachably mounted in the bottom area of the water groove 310 to form a debris collection chamber with an upper opening, the opening of the debris collection chamber is used to receive sewage discharged by the filter device 600, and a water outlet 562 is provided on the filter frame 561. The filter screen at least covers the water outlet 562, thereby filtering the received sewage and collecting the lint and other filtered impurities in the debris collection chamber.

The filter device 600 of this embodiment is provided with a filter screen for filtering, and the mesh number of the filter screen in the debris collection assembly 560 is at least not less than the mesh number of the filter screen in the filter device 600. That is, the aperture of the filter screen in the debris collection assembly 560 is less than or equal to the aperture of the filter screen in the filter device 600, which can ensure an effective filtering effect on the filter impurities carried in the sewage, and prevent the filter impurities of small size from being discharged with the water flow.

In this embodiment, the water outlet 562 is at least arranged on the bottom wall of the filter frame 561, and the water entering the debris collection assembly 560 can be filtered and discharged to the greatest extent, so as to avoid the residual sewage in the lint collecting chamber. A plurality of raised supports 321 are arranged at intervals on the inner side of the bottom wall 311 of the water groove 310 corresponding to the installation position of the filter frame 561, and the supports 321 are supported below the filter frame 561, so that the bottom wall of the filter frame 561 is arranged at intervals from the bottom wall 311 of the water groove 310.

Specifically, the support 321 may be two or more support ribs arranged at intervals, supporting the filter frame 561 at a position spaced a certain distance from the bottom wall 311 of the water groove 310, so that the bottom wall of the filter frame 561 is not in direct contact with the bottom wall 311 of the water groove 310. This arrangement can prevent the water outlet 562 on the bottom wall of the filter frame 561 from being blocked by the bottom wall 311 of the water groove 310, resulting in the problem that the sewage in the debris collection chamber cannot be filtered and flowed out through the water outlet 562 in time.

In the preferred solution of this embodiment, the water outlet 562 is also provided on multiple side walls of the filter frame 561, and multiple water outlets 562 are provided on the bottom wall and the side walls of the filter frame 561. By increasing the number of the water outlets 562, the water outlet area of the debris collection assembly 560 can be increased, thereby improving its filtering and discharge efficiency of the received sewage. This can avoid the problem that when the flow rate of sewage discharged by the filter device 600 is large, the sewage overflows from the upper open side of the lint collecting chamber, causing the filtered impurities to enter the water groove 310.

In a further solution of this embodiment, a limit baffle 322 extending upward is provided inside the bottom wall 311 of the water groove 310, and the limit baffle 322 is provided vertically. The bottom wall 311 of the water groove 310 is partially inclined to form an inclined wall 312 arranged opposite to the limit baffle 322, and the distance between the inclined wall 312 and the limit baffle 322 gradually increases from bottom to top. The filter frame 561 is limited between the limit baffle 322 and the inclined wall 312.

In the above scheme, the limiting baffle 322 cooperates with the inclined wall 312 to limit the filter frame 561, so that the filter frame 561 can be more stably installed in the water groove 310, especially when the sewage flow rate is large, to avoid the filter frame 561 being overturned by the impact force of the water flow, resulting in the problem of failure of its filtering effect on the sewage.

In this embodiment, a dispenser box for holding detergent is also provided in the water groove 310, and the dispenser box can be inserted/extracted in the water groove 310. After the dispenser box is extracted from the water groove, the debris collection assembly 560 can be removed from the water groove 310, so as to clean the filtered impurities collected therein.

In a further solution of this embodiment, a sewage inlet 301 connected to the sewage outlet 6103 of the filter device 600 is provided on the water groove 310, and a sewage flow channel 330 communicated to the sewage inlet 301 is provided inside the water groove 310, and the sewage discharged from the filter device 600 is transported to the recovery device 500 through the sewage flow channel 330. The upper side of the recovery device 500 has an opening (that is, the opening of the debris collection chamber in the debris collection assembly 560), and the opening is arranged below the water outlet end of the sewage flow channel 330.

Specifically, the detergent dispensing device 300 has a certain extension length, the sewage inlet 301 is arranged near one end of the detergent dispensing device 300, and the debris collection assembly 560 is arranged in the middle area of the water groove 310 in the detergent dispensing device 300 along the length extension direction of the detergent dispensing device 300. The sewage flow channel 330 guides the sewage entering from the sewage inlet 301 to the middle of the water groove 310, and after the sewage water reaches the water outlet end of the sewage flow channel 330, it flows out from the water outlet end and falls into the debris collection assembly 560 below.

In the preferred solution of this embodiment, the detergent dispensing device 300 extends from the area close to the front side wall 12 to the area close to the rear side wall 16 in the second installation space N. The filter device 600 is arranged in the area close to the rear side wall 16 in the first installation space M. In order to facilitate cooperation with the filter device 600, the sewage discharge port 301 is arranged on the detergent dispensing device 300 in the area close to the rear side wall 16.

In the above scheme, the filter device 600 and the sewage inlet 301 on the detergent dispensing device 300 are arranged together close to the rear side wall 16 of the box 10, which further shortens the distance between the sewage outlet 6103 of the filter device 600 and the sewage inlet 301 of the detergent dispensing device 300, thereby further simplifying the layout of the sewage pipeline 240.

In another preferred scheme of this embodiment, the filter device can also be arranged in the first installation space in an area close to the front side wall of the box. Correspondingly, the sewage inlet is arranged in an area close to the front side wall of the box on the detergent dispensing device, which can also shorten the distance between the sewage discharge outlet of the filter device and the sewage inlet of the detergent dispensing device.

In this embodiment, the recovery device 500 is arranged inside the water groove of the detergent dispensing device 300, and does not occupy additional installation space, making the structure of the washing apparatus compact. The recovery device 500 can filter the sewage, thereby separating and collecting the filtered impurities therein, which is convenient for the user to clean up. At the same time, since the recovery device 500 is not connected in series to the circulating filtration pipeline, even if it is blocked by the filtered impurities, it will not cause the circulating filtration pipeline to be cut off, resulting in the problem of forced cessation of the circulating filtration process.

### Embodiment 6

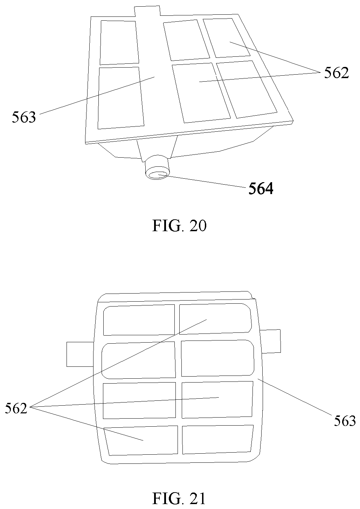

As shown in FIGS. 4, and FIGS. 18 to 21 , the difference between this embodiment and the Embodiment 5 is that the debris collection assembly 560 is installed on the dispenser box 340.

Specifically, an insertable/removable dispenser box 340 is disposed inside the water groove 310, and a detergent adding chamber 341 and a recovery installation chamber 342 are formed on the dispenser box 340, and the detergent adding chamber 341 and the recovery installation chamber 342 are independently communicated to the water groove 310. The debris collection assembly 560 is installed in the recovery installation chamber 342.

In the above scheme, a handle 345 for the user to grasp is set at the front end of the dispenser box 340, and the debris collection assembly 560 can be inserted into/pulled out of the water groove 310 along with the dispenser box 340. Preferably, the debris collection assembly 560 is detachably set inside the recovery installation chamber 342. The user can pull out the dispenser box 340 and remove the debris collection assembly 560 for cleaning, which is easy to operate.

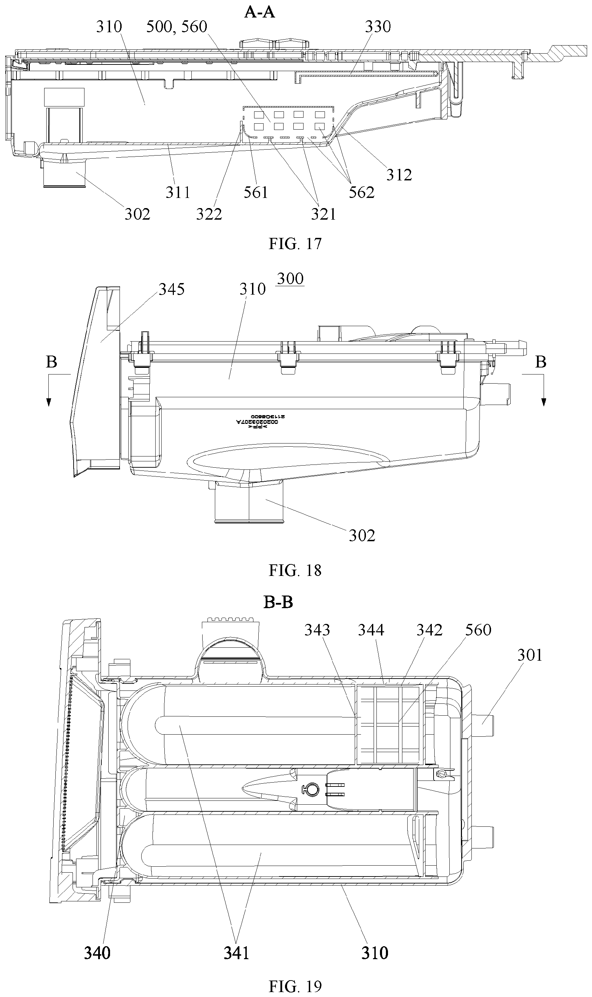

In this embodiment, at least two detergent adding chambers 341 are set on the dispenser box 340, which are respectively located on the upper and lower sides in FIG. 19, wherein the upper detergent adding chamber 341 is shorter than the lower detergent adding chamber 341, and a recovery installation chamber 342 is set at the right end of the upper detergent adding chamber 341.

In this embodiment, the debris collection assembly 560 specifically includes a filter bracket 563 and a filter screen, and the filter bracket 563 forms a relatively closed filter chamber for receiving sewage discharged by the filter device 600. The filter bracket 563 is provided with a sewage inlet 564 and a plurality of water outlets 562, and the filter screen at least covers the water outlets 562, and is used to filter the received sewage.

In the above scheme, sewage enters the filter chamber formed by the filter bracket 563 through the sewage inlet 564, and can only flow out through the filter screen covering the water outlet 562, thereby ensuring the filtering effect to the greatest extent and preventing sewage from entering the water groove 310 without passing through the filter screen.

In a further solution of this embodiment, an isolation baffle 343 is provided on the dispenser box 340, thereby forming a mutually isolated detergent adding chamber 341 and a recovery installation chamber 342. The water outlet 562 is provided on the upper surface of the filter bracket 563, and the upper side of the isolation baffle 543 is at least higher than the upper surface of the filter bracket 563.

When the filtered water flows out from the water outlet 562 located on the upper surface of the filter bracket 563, since the isolation baffle 543 is at a higher height, the filtered water will not pass over the isolation baffle 543 and enter the detergent adding chamber 341, thereby avoiding contamination of the detergent contained in the detergent adding chamber 341, or the situation in which the detergent in the detergent adding chamber 341 is put into the water cylinder 100 at the wrong washing stage due to overflow of water from the recovery installation chamber 342 into the detergent adding chamber 341.

Furthermore, the recovery installation chamber 342 is surrounded by an isolation baffle 343 and an overflow plate 344. The upper side of the overflow baffle 344 is lower than the isolation baffle 343. Water flowing out of the water outlet 562 enters the recovery installation chamber 342 and can overflow from the upper side of the overflow baffle 344 into the water groove 310, thereby entering the water cylinder 100.

In the preferred solution of this embodiment, water outlets 562 are provided on both upper and lower surfaces of the filter bracket 563, and the sewage entering can be filtered through the filter screen and then flow out from both upper and lower sides, thereby improving the filtration efficiency of the debris collection assembly 560 for sewage. Similar to the above-mentioned Embodiment 5, the mesh number of the filter screen is also not less than the mesh number of the filter screen used for filtering in the filter device 600, so as to ensure that all the filtered impurities in the sewage can be intercepted.

In this embodiment, the water groove 310 is extended along the movement direction of the dispenser box 340 for insertion/extraction, the left end is open for the dispenser box 340 to extend outward, and the right end is closed. The right end of the water groove 310 is provided with a sewage inlet 301 connected to the sewage outlet 6103 of the filter device 600. The debris collection assembly 560 is inserted into/extracted from the water groove 310 along with the dispenser box 340, and the sewage inlet 564 of the filter bracket 563 is provided at the right end of the dispenser box 340.

When the debris collection assembly 560 is inserted into the water groove 310 along with the dispenser box 340, the sewage inlet 564 is sealed and connected with the sewage inlet 301. When the debris collection assembly 560 is pulled out of the water groove 310 along with the dispenser box 340, the sewage inlet 564 is separated from the sewage inlet 301.

In a specific solution of this embodiment, when the debris collection assembly 560 is inserted into the water groove 310 along with the dispenser box 340, the sewage inlet 564 is inserted into the sewage inlet 301. A sealing structure is provided on the outer wall of the sewage inlet 564 and/or the inner wall of the sewage inlet 301 to achieve a sealed connection between the two, so that the sewage discharged by the filter device 600 can flow from the sewage inlet 301 to the sewage inlet 564 and enter the filter chamber formed by the filter bracket 563, and there will be no leakage problem at the plug-in point of the sewage inlet 564 and the sewage inlet 301. When the debris collection assembly 560 is pulled out of the water groove 310 along with the dispenser box 340, the sewage inlet 564 is pulled out from the sewage inlet 301, and the two are no longer communicated.

In another specific scheme of this embodiment, the sewage inlet 301 extends to the inside of the water groove 310 to form a plug-in portion. When the debris collection assembly 560 is inserted into the water groove 310 along with the dispenser box 340, the sewage inlet 564 is sleeved on the said plug-in portion. A sealing structure is provided on the inner wall of the sewage inlet 564 and/or the outer wall of the plug-in portion to achieve a sealed connection between the two, so that the sewage discharged by the filter device 600 can flow from the sewage inlet 301 to the sewage inlet 564 and enter the filter chamber formed by the filter bracket 563, and there will be no leakage problem at the sleeve joint of the sewage inlet 564 and the said plug-in portion. When the debris collection assembly 560 is pulled out of the water groove 310 along with the dispenser box 340, the said plug-in portion is pulled out from the sewage inlet 564, and the two are no longer communicated.

In this embodiment, the debris collection assembly 560 is installed on the dispenser box 340 of the detergent dispensing device 300, and can be inserted into/pulled out of the water groove 310 of the detergent dispensing device 300 along with the dispenser box 340, and then the user can pull out the dispenser box 340, and then remove the debris collection assembly 560 from the recovery installation chamber 342 therein for cleaning. Since the dispenser box 340 can be pulled out of the water groove 310 as a whole, the disassembly and assembly operation of the debris collection assembly 560 is more convenient.

### Embodiment 7

The difference between this embodiment and the above-mentioned Embodiment 6 is that a detergent adding chamber and a recovery installation chamber are respectively arranged on both sides of the dispenser box along the pulling direction thereof, and the detergent adding chamber and the recovery installation chamber are basically symmetrically arranged on the dispenser box.

Specifically, a detergent adding chamber is provided on one side of the dispenser box for users to add detergent to be dispensed therein, and a recovery installation chamber having a shape and size substantially consistent with the detergent adding chamber is provided on the other side. The debris collection assembly is detachably installed in the recovery installation chamber and fills the recovery installation chamber as much as possible. There is a certain interval between the detergent adding chamber and the recovery installation chamber to prevent the water discharged after the debris collection assembly filters the sewage from entering the detergent adding chamber.

Compared with the Embodiment 6, the space inside the recovery installation chamber is increased, and the filter chamber formed by the filter bracket of the debris collection assembly has a larger volume, which is conducive to improving the efficiency of the debris collection assembly in filtering and treating sewage. The distance between the detergent adding cavity and the recovery installation chamber is larger, which can better prevent the water after sewage filtration from overflowing into the detergent adding cavity.

### Embodiment 8

The difference between this embodiment and the above-mentioned Embodiment 6 is that a dispenser box and a recovery installation box are respectively arranged in the water groove, and the dispenser box and the recovery installation box can be independently inserted into/pulled out of the water groovegroove of the detergent dispensing device, and the internal volume of the recovery installation box is communicated to the water groovegroove, and the debris collection assembly can be detachably installed inside the recovery installation box.

In this embodiment, a recovery installation box independent of the dispenser box is arranged in the water groove of the detergent dispensing device for installing the debris collection assembly. When the user takes out the debris collection assembly for cleaning, the recovery installation box can be independently pulled out without pulling out the dispenser box.

Furthermore, the dispenser box and the recovery installation box are arranged horizontally and side by side in the water groove. In this way, when the water in the dispenser box is mixed with the detergent and overflows into the water groove, the mixed solution of the detergent and water will not enter the recovery installation box. Correspondingly, when the water discharged from the debris collection assembly after filtering the sewage overflows from the recovery installation box into the water groove, it will not enter the dispenser box. In this way, it can be ensured that the liquids in the dispenser box and the recovery installation box will not mix with each other, and the user experience is better.

At the same time, since the dispenser box and the recovery installation box are arranged side by side in the water groove, when the two are drawn out at the same time, they will not block each other, and thus will not affect the user's respective operations on the two.

In this embodiment, similar to the above-mentioned Embodiment 6, when the debris collection assembly is inserted into the water groove along with the recovery installation box, the sewage inlet on the filter bracket is sealed and connected with the sewage inlet on the sink; the debris collection assembly is pulled out of the water groove along with the recovery installation box, and the sewage inlet is separated from the sewage inlet.

In a specific solution of this embodiment, when the debris collection assembly is inserted into the water groove along with the recovery installation box, the sewage inlet is inserted into the sewage inlet. A sealing structure is provided on the outer wall of the sewage inlet and/or the inner wall of the sewage inlet to achieve a sealed connection between the two. When the debris collection assembly is pulled out of the water groove along with the recovery installation box, the sewage inlet is pulled out of the sewage inlet, and the two are no longer communicated.

In another specific solution of this embodiment, the sewage inlet extends to the inner side of the water groove to form a plug-in portion, and when the debris collection assembly is inserted into the water groove along with the recovery installation box, the sewage inlet is sleeved on the plug-in portion. A sealing structure is provided on the inner wall of the sewage inlet and/or the outer wall of the plug-in portion to achieve a sealed connection between the two. When the debris collection assembly is pulled out of the water groove along with the recovery installation box, the plug-in portion is pulled out from the sewage inlet, and the two are no longer communicated.

In this embodiment, the debris collection assembly is installed on a recovery installation box that is independent of the dispenser box, so that the debris collection assembly can be independently extracted and removed for cleaning. At this time, the dispenser box is still inserted into the sink and does not affect the state of the dispenser box.

The above is only a preferred embodiment of the present invention, and does not limit the present invention in any form. Although the present invention has been disclosed as a preferred embodiment, it is not used to limit the present invention. Any technician familiar with this patent can make some changes or modify the technical contents suggested above into equivalent embodiments without departing from the scope of the technical solution of the present invention. However, any simple modification, equivalent change and modification made to the above embodiments according to the technical essence of the present invention without departing from the content of the technical solution of the present invention still fall within the scope of the solution of the present invention.

## Claims

1. A washing apparatus, comprising:
a box;
a water cylinder, arranged inside the box;
a filter device having a water inlet and a filtered water outlet respectively communicated to the water cylinder;
**characterized in that** the washing apparatus comprises a switching device for controlling the water cylinder and an external drainage pipeline of the washing apparatus to be communicated to the filtered water outlet of the filter device, and the external drainage pipeline is configured to discharge water to an outside of the washing apparatus;
a cylinder wall of the water cylinder, a top wall of the box, and side walls of the box together form an installation space extending from a cylinder mouth of the water cylinder to a bottom of the cylinder, and the switching device is arranged in the installation space.

2. The washing apparatus according to claim 1, **characterized in that** a connecting frame is installed inside the side wall of the box constituting the installation space, and the switching device is installed on the connecting frame.

3. The washing apparatus according to claim 2, **characterized in that** an installation part extending a certain length in a horizontal direction is provided on an inner side of an upper portion of the side wall, and the installation part is protruded from the inner surface of the side wall; the connecting frame comprises:
a connecting part, is configured to connect with the installation part, and at least comprising a first limiting portion affixed to an upper surface of the installation part, and a second limiting portion located below the installation part and at least partially affixed to the installation part;
a plate-shaped part, formed by extending downward from a side of the second limiting portion close to the side wall, and the switching device is installed on a surface of the plate-shaped part facing away from the side wall.

4. The washing apparatus according to claim 1, **characterized in that** the switching device has a certain length L in a horizontal direction from the cylinder mouth of the water cylinder to the bottom of cylinder, and has a certain width K in a direction perpendicular to its length direction, and the width K is smaller than the length L.

5. The washing apparatus according to any one of claims 1 to 4, **characterized in that** the filter device is arranged in the installation space where the switching device is located.

6. The washing apparatus according to claim 5, **characterized in that** the switching device is arranged in an area close to the side wall of the box in the installation space, and the filter device is arranged in an area close to the top wall of the box in the installation space.

7. The washing apparatus according to claim 6, **characterized in that** an installation beam is provided in a top area of the box, and the filter device is connected to the installation beam.

8. The washing apparatus according to claim 7, **characterized in that** the installation beam has a certain extension length, and both ends of the installation beam respectively provided with a beam connecting part for connecting with the box; the filter device is connected to a beam main body between the two beam connecting parts, and the beam main body is higher than the beam connecting part.

9. The washing apparatus according to any one of claims 1 to 8, **characterized in that** the filter device has a sewage outlet for discharging sewage to the outside, and the washing apparatus further comprises a recovery device communicated to the sewage outlet for receiving sewage discharged from the filter device;
the cylinder wall of the water cylinder, the top wall of the box, and the other side wall of the box together constitute another installation space arranged opposite to the installation space where the switching device is located, and the recovery device is arranged in the other installation space.

10. The washing apparatus according to claim 9, **characterized in that** the switching device is configured to control an on-off state between the sewage outlet of the recovery device and the filter device.

11. A washing apparatus, comprising:
a water cylinder;
a circulating filtering pipeline, a water inlet and a water outlet of which are respectively communicated to the water cylinder;
a filter device, arranged on the circulating filtering pipeline, having a sewage outlet for discharging sewage to outside;
a detergent dispensing device, wherein a recovery device is provided inside a water groove of the detergent dispensing device, and the recovery device is communicated with the sewage outlet of a filter device.

12. The washing apparatus according to claim 11, **characterized in that** the water groove is communicated to the water cylinder, and the recovery device includes a debris collection assembly arranged inside the water groove; the debris collection assembly receives sewage discharged by the filter device for filtering, collects filtered impurities in the sewage, and the filtered water enters the water groove.

13. The washing apparatus according to claim 12, **characterized in that** an insertable/removable dispenser box is provided in the water groove, and a detergent adding chamber and a recovery installation chamber isolated from each other are formed on the dispenser box, and the detergent adding chamber and the recovery installation chamber are independently communicated to the water groove respectively; the debris collection assembly is installed in the recovery installation chamber.

14. The washing apparatus according to claim 12, **characterized in that** an insertable/removable recovery installation box is provided in the water groove, an internal volume of the recovery installation box is communicated with the water groove; and the debris collection assembly is installed inside the recovery installation box.

15. The washing apparatus according to claim 12 or 13, **characterized in that** the debris collection assembly comprises:
a filter bracket, forms a filter chamber for receiving sewage, and the filter bracket is provided with a sewage inlet and a plurality of water outlets,
a filter screen, covers the water outlet and is configured to filter the received sewage.

16. The washing apparatus according to claim 15 is **characterized in that** a sewage inlet communicated to the sewage outlet of the filter device is provided on the water groove; the debris collection assembly is inserted into the water groove along with the dispenser box or the recovery installation box, and the sewage inlet is sealedly connected with the sewage inlet; the debris collection assembly is pulled out of the water groove along with the dispenser box or the recovery installation box, and the sewage inlet is separated from the sewage inlet.

17. The washing apparatus according to claim 15 or 16, **characterized in that** the debris collection assembly is arranged on the dispenser box, and an isolation baffle is arranged inside the dispenser box to form the detergent adding chamber and the recovery installation chamber that are isolated from each other; the water outlet is at least arranged on an upper surface of the filter bracket, and an upper side of the isolation baffle is at least higher than the upper surface of the filter bracket.

18. The washing apparatus according to claim 12, **characterized in that** the debris collection assembly comprises:
a filter frame, configured to be detachably mounted in a bottom area of the water groove to form a debris collection chamber with an opening at top, the opening of the debris collection chamber is configured to receive sewage discharged by the filter device, a water outlet is provided on the filter frame; and
a filter screen, covers the water outlet and is configured to filter the received sewage.

19. The washing apparatus according to claim 18, **characterized in that** the water outlet is at least arranged on a bottom wall of the filter frame, and a plurality of raised supports are arranged at intervals on an inner side of the bottom wall of the water groove corresponding to the installation position of the filter frame, and the supports are supported below the filter frame so that the bottom wall of the filter frame is spaced apart from the bottom wall of the water groove.

20. The washing apparatus according to claim 18 or 19, **characterized in that** a sewage inlet communicated to the sewage outlet of the filter device is provided on the water groove, a sewage flow channel communicated to the sewage inlet is provided inside the water groove, and an opening of the debris collection chamber is provided below the water outlet end of the sewage flow channel.

21. A switching device, comprising:
a first valve body, having a first inlet and a first outlet, and a first valve plug for controlling an opening and closing between the first inlet and the first outlet is arranged inside;
a second valve body, having a second inlet and a second outlet, and a second valve plug for controlling an opening and closing of the second inlet and the second outlet is arranged inside;
**characterized in that** a driving member and a transmission mechanism are provided, the driving member generates movement in a first direction, and drives the first valve plug to move through the transmission mechanism; the driving member generates movement in a second direction opposite to the first direction, and drives the second valve plug to move through the transmission mechanism.

22. The switching device according to claim 21, **characterized in that** the driving member includes a driving wheel, and the transmission mechanism includes two groups of transmission components; one group of the transmission components is transmission-connected to the first valve plug to convert a rotation of the driving wheel along the first direction into a movement of the first valve plug; the other group of the transmission components is transmission-connected to the second valve plug to convert a rotation of the driving wheel along the second direction into a movement of the second valve plug.

23. The switching device according to claim 22, **characterized in that** the rotation of the driving wheel in the first direction drives the first valve plug to move, while the second valve plug remains stationary; the rotation of the driving wheel in the second direction drives the second valve plug to move, while the first valve plug remains stationary.

24. The switching device according to claim 23, **characterized in that** the transmission assembly comprises a transmission wheel having an annular structure, and a one-way transmission member coaxially arranged inside the annular structure, and the driving wheel is in transmission connection with the transmission wheel or the one-way transmission member;
a protruding stop part is provided on the inner circumferential wall of the annular structure of the transmission wheel, and the stop part has a stop surface and a release surface which respectively form a certain angle with the circumference of the inner circumferential wall;
the one-way transmission member comprises a transmission body and a pushing body fixedly arranged on an outer peripheral wall of the transmission body, the outer peripheral wall of the transmission body is spaced apart from the inner circumferential wall of the annular structure, and the pushing body extends obliquely from the outer peripheral wall of the transmission body to the inner circumferential wall of the annular structure;
an extended end of the pushing body has a pushing surface, and the one-way transmission member rotates in one direction relative to the transmission wheel so that the pushing surface stops at the stop surface, driving the transmission wheel and the one-way transmission member to rotate synchronously; the pushing body has a sliding surface on the side facing the inner circumferential wall of the annular structure, and the one-way transmission member rotates in another direction relative to the transmission wheel so that the sliding surface slides along the release surface, and the transmission wheel remains stationary.

25. The switching device according to claim 24, **characterized in that** the transmission assembly comprises a first transmission assembly drivingly connected to the first valve plug, and a second transmission assembly drivingly connected to the second valve plug; the first transmission assembly comprises a first transmission wheel and a first one-way transmission member coaxially arranged, and the second transmission assembly comprises a second transmission wheel and a second one-way transmission member coaxially arranged;
the first one-way transmission member is coaxially arranged with the driving wheel and is connected to the driving wheel through a circumferential limiting structure, so that the driving wheel and the first one-way transmission member rotate synchronously; the first transmission assembly also includes a first output wheel, which is arranged on one side of an outer periphery of the first transmission wheel and is connected to the first transmission wheel and rotates with the first transmission wheel;
the second transmission wheel is arranged on one side of an outer periphery of the driving wheel, and is in transmission connection with the driving wheel, and rotates with the driving wheel; the second transmission assembly also includes a second output wheel, which is coaxially arranged with the second one-way transmission member, and is in transmission connection with the second one-way transmission member through a circumferential limiting structure, so that the second output wheel and the second one-way transmission member rotate synchronously;
the second output wheel is arranged coplanar with the first output wheel and is located on the other side of the outer periphery of the first transmission wheel relative to the first output wheel.

26. The switching device according to claim 25, **characterized in that** the switching device further comprises a driving motor, an output end of which is connected to the first one-way transmission member, and can drive the first one-way transmission member to generate bidirectional rotation along the first direction and the second direction.

27. The switching device according to claim 25 or 26, **characterized in that** the first valve plug is reciprocatably arranged inside the first valve body to open/close the communication between the first inlet and the first outlet; a first protrusion is eccentrically arranged on a surface of the first output wheel facing away from the driving wheel, and the first transmission assembly further comprises a first connecting rod; the first connecting rod extends along a reciprocating direction of the first valve plug, one end of the first connecting rod is connected to the first valve plug, and the other end is provided with a first slideway extending in a direction perpendicular to the first connecting rod; the first protrusion is slidably arranged in the first slideway;
and/or, the second valve plug is reciprocatingly arranged inside the second valve body to open/disconnect a communication between the second inlet and the second outlet; a second protrusion is eccentrically arranged on a surface of the second output wheel facing away from the driving wheel, and the second transmission assembly also includes a second connecting rod; the second connecting rod extends along a reciprocating direction of the second valve plug, one end of which is connected to the second valve plug, and the other end of which is provided with a second slideway extending in a direction perpendicular to the second connecting rod; the second protrusion is slidably arranged in the second slideway.

28. The switching device according to any one of claims 21 to 27, **characterized in that** a third outlet is also provided on the first valve body of the switching device, and the first valve plug controls the first outlet and the third outlet to selectively communicate with the first inlet.

29. A washing apparatus, comprising:
a water cylinder;
a circulating filtering pipeline, a water inlet and a water outlet of which are respectively communicated to the water cylinder;
a filter device, is arranged on the circulating filtering pipeline and has a sewage outlet communicated to a sewage pipeline;
wherein it also includes the switching device according to any one of claims 21 to 28, **characterized in that** the first valve body is arranged on the circulating filtering pipeline, the second valve body is arranged on the sewage discharge pipeline, and the second inlet of the second valve body is connected to the sewage outlet of the filter device;
preferably, the washing apparatus has the structure of the washing apparatus as described in any one of claims 1-20.

30. The washing apparatus according to claim 29, **characterized in that** a third outlet is further provided on the first valve body of the switching device, and the first valve plug controls the first outlet and the third outlet to selectively communicate with the first inlet;
the washing apparatus also includes an external drainage pipeline for draining water to the outside, the first inlet of the first valve body is communicated to the filtered water outlet of the filter device, the first outlet is communicated to the water cylinder, and the third outlet is communicated to the external drainage pipeline.

31. A control method of a washing apparatus according to claim 29 or 30, **characterized in that** the switching device further comprises a driving motor, and the control method comprising:
the driving motor rotating in a first direction, and drives the first valve plug to move through the transmission mechanism, thereby changing the on-off state of the circulating filtering pipeline;
the driving motor rotating in the second direction, and drives the second valve plug to move through the transmission mechanism, thereby changing the on-off state of the sewage pipeline.

32. The control method of the washing apparatus according to claim 31, **characterized in that** when the driving motor rotates in the first direction, the second valve plug remains stationary; when the driving motor rotates in the second direction, the first valve plug remains stationary.

33. The control method of the washing apparatus according to claim 32, **characterized in that** the washing apparatus further comprises an external drainage pipeline for discharging water to the outside of the washing apparatus; a third outlet is further arranged on the first valve body of the switching device, the first inlet and the first outlet are communicated to the circulating filter pipeline, and the third outlet is communicated to the external drainage pipeline;
the switching device has a circulating filtering state that communicates the circulation filtering pipeline, and a draining state that communicates the water cylinder and the external drainage pipeline; the control method includes: driving the motor to rotate in the first direction, transmitting a movement of the first valve plug through the transmission mechanism, so that the switching device switches between the circulating filtering state and the draining state.

34. The control method of the washing apparatus according to claim 33, **characterized in that** it comprises the following steps:
S11', in initial state, the switching device communicates the water cylinder and the external drainage pipeline;
S12', the washing apparatus receives a circulation filtering instruction, drives the motor to rotate in the first direction, and switches the switching device to the circulating filtering state;
S13', the circulating filtering process ends, the driving motor rotates in the first direction again, and the switching device returns to the draining state.

35. The control method of the washing apparatus according to claim 33, **characterized in that** it comprises the following steps:
S11, in initial state, the switching device communicates the circulating filtration pipeline;
S12, the washing apparatus receives a draining instruction, drives the motor to rotate in the first direction, and switches the switching device to the draining state;
S13, the drainage process is completed, the driving motor rotates in the first direction again, and the switching device returns to the circulating filtering state.

36. The control method of the washing apparatus according to claim 35, **characterized in that** the switching device is provided with a first position switch, and the first valve plug or the transmission mechanism is provided with two first triggering parts for triggering the first position switch, and the two first triggering parts correspond to the circulating filtering state and the draining state of the switching device respectively;
in step S12 and step S13, if a signal indicating that the first position switch is triggered is received, the driving motor stops rotating.

37. The control method of the washing apparatus according to any one of claims 32 to 36, **characterized in that** it comprises the following steps:
S21, in initial state, the switching device cuts off the sewage pipeline;
S22, the washing apparatus receives a sewage discharge instruction, drives the motor to rotate in the second direction, and opens the sewage discharge pipeline;
S23, the sewage discharge process is completed, and the driving motor rotates in the second direction again to cut off the sewage discharge pipeline.

38. The control method of the washing apparatus according to claim 37, **characterized in that** the switching device is provided with a second position switch, and the second valve plug or the transmission mechanism is provided with two second triggering parts for triggering the second position switch, and the two second triggering parts correspond to the on state and the off state of the sewage pipeline respectively;
in step S22 and step S23, if a signal indicating that the second position switch is triggered is received, the driving motor stops rotating.

39. The control method of the washing apparatus according to claim 37 or 38, **characterized in that** the washing apparatus also includes a circulation pump arranged on the circulation filtering pipeline and located between the water cylinder and the water inlet of the filter device; in step S22, after the sewage pipeline is connected, the circulation pump is turned on to drive the sewage in the filter device to be discharged.
